# EUROPEAN PATENT APPLICATION

(11) **EP 4 742 644 A1**
(43) Date of publication of application: **13.05.2026**
(21) Application number: 24916481.5
(22) Date of filing: 09.10.2024
(51) Int. Cl.: H04M 1/72484

(54) **METHOD FOR DISPLAYING NOTIFICATION AND ELECTRONIC DEVICE**

(30) Priority: 10.01.2024 CN 202410045011
(71) Applicant: Huawei Technologies Co., Ltd., Shenzhen, Guangdong 518129 (CN)
(72) Inventor: DING, Yaling, Shenzhen, Guangdong 518129 (CN); CHEN, Yuhan, Shenzhen, Guangdong 518129 (CN); LI, Minhao, Shenzhen, Guangdong 518129 (CN); HUANG, Xin, Shenzhen, Guangdong 518129 (CN); HUANG, Jing, Shenzhen, Guangdong 518129 (CN)
(74) Representative: Gill Jennings & Every LLP
(86) International application number: PCT/CN2024/123598
(87) International publication number: WO 2025/148430

(57) **Abstract**

Embodiments of this application provide a notification display method and an electronic device. The method includes: in a case that a first live task process exists on a first electronic device, when a status of the first electronic device is switched to a lock screen state, displaying a first notification corresponding to the first live task process on a lock screen interface of the first electronic device, where the first notification is presented in a capsule state; in response to a first operation of a user, expanding the first notification displayed on the lock screen interface of the first electronic device into a second notification, where the second notification is presented in a card state; and in response to a second operation of the user, expanding the second notification displayed on the lock screen interface of the first electronic device into a third notification displayed in full screen. According to the method or the electronic device, a live task notification can be presented in different forms on the lock screen interface, and the live task notification can be switched between different presentation forms, so that notification display requirements of a user in different scenarios can be satisfied.

## Description

This application claims priority to Chinese Patent Application No. 202410045011.5, filed with the China National Intellectual Property Administration on January 10, 2024 and entitled "NOTIFICATION DISPLAY METHOD AND ELECTRONIC DEVICE", which is incorporated herein by reference in its entirety.

### TECHNICAL FIELD

Embodiments of this application relate to the terminal display field, and more specifically, to a notification display method and an electronic device.

### BACKGROUND

Live tasks such as a flight status running on an electronic device have extremely strong timeliness. A user has a strong need to track and view such notifications in a timely manner. After the electronic device enters a lock screen state, the electronic device usually terminates process display of a current task. If the user wants to view a progress of the live task at any time, the user needs to frequently perform unlocking to enter a home screen to view the progress. This leads to poor user experience.

### SUMMARY

This application provides a method and an electronic device. According to the method and the electronic device, a live task notification can be presented on a lock screen interface in different forms, and the live task notification can be switched between different presentation forms, so that notification display requirements of a user in different scenarios can be met. When the notification is presented in a capsule state, a personalized effect of the lock screen interface can be fully presented. In addition, through switching between notification presentation forms, the user can obtain more detailed notification information and perform a related shortcut operation without unlocking the electronic device, so that user experience is improved.

According to a first aspect, a notification display method is provided. The method includes: in a case that a first live task process exists on a first electronic device, when a status of the first electronic device is switched to a lock screen state, displaying a first notification corresponding to the first live task process on a lock screen interface of the first electronic device, where the first notification is presented in a capsule state; in response to a first operation of a user, expanding the first notification displayed on the lock screen interface of the first electronic device into a second notification, where the second notification is presented in a card state; and in response to a second operation of the user, expanding the second notification displayed on the lock screen interface of the first electronic device into a third notification, where the third notification is displayed in full screen on the lock screen interface of the first electronic device.

Optionally, that the first notification is presented in the capsule state may also be described as follows: The first notification is presented in a first state. An explanation of the first state is the same as an explanation of the capsule state. Similarly, that the second notification is presented in the card state may also be described as follows: The second notification is presented in a second state. An explanation of the second state is the same as an explanation of the capsule state. That the third notification is presented in full screen may also be described as follows: The third notification is presented in a third state. An explanation of the third state is the same as an explanation of full screen presentation (or immersive-state presentation).

It should be noted that the foregoing three notification states are not indispensable. In another embodiment of this application, there may be only two of the states and switching between the two states. Alternatively, there may further be a fourth notification state or more notification states, and switching is randomly performed between the plurality of states through an operation of a user.

In some embodiments, the first live task process may be, for example, any one of a flight status reminder process, an exercise recording process, a navigation process, a music play process, a delivery progress reminder process, and a trip reminder process. Alternatively, the first live task process may be another live task process. This is not limited in this application.

In some embodiments, the first operation may be an operation that the user slides up on the lock screen interface on which the first notification is displayed, or an operation that the user taps a text region of the first notification on the lock screen interface on which the first notification is displayed. The first operation may alternatively be another operation, for example, an operation preset by the user. This is not limited in this application.

In some embodiments, the second operation may be an operation that the user taps a main image region of the second notification on the lock screen interface on which the second notification is displayed, or an operation that the user touches and holds the second notification on the lock screen interface on which the second notification is displayed. The second operation may alternatively be another operation, for example, an operation preset by the user. This is not limited in this application.

In a possible implementation, information about the first live task process presented in the second notification is more than information about the first live task process presented in the first notification, and information about the first live task process presented in the third notification is more than the information about the first live task process presented in the second notification.

In a possible implementation, a quantity of shortcut operation options supported by the second notification is greater than a quantity of shortcut operation options supported by the first notification, and a quantity of shortcut operation options supported by the third notification is greater than the quantity of shortcut operation options supported by the second notification.

In embodiments of this applications, a live task notification can be presented on a lock screen interface in different forms, and the live task notification can be switched between different presentation forms, so that notification display requirements of a user in different scenarios can be met. When the notification is presented in a capsule state, a personalized effect of the lock screen interface can be fully presented. In addition, through switching between notification presentation forms, the user can obtain more detailed notification information and perform a related shortcut operation without unlocking the electronic device, so that user experience is improved.

With reference to the first aspect, in a possible implementation, the method further includes: in response to a third operation of the user, expanding the first notification displayed on the lock screen interface of the first electronic device into the third notification.

In some embodiments, the third operation may be an operation that the user taps a main image region of the first notification on the lock screen interface on which the first notification is displayed, or an operation that the user touches and holds the first notification on the lock screen interface on which the first notification is displayed. The third operation may alternatively be another operation, for example, an operation preset by the user. This is not limited in this application.

In embodiments of this application, a notification task can be directly and quickly switched between a capsule state and an immersive state, that is, the notification can be switched between any two of the capsule state, a card state, and the immersive state. An interaction manner is simple and easy to use. Quick switching between any two notification presentation forms can well match live notification display requirements of a user in different use scenarios, so that user experience is improved.

With reference to the first aspect, in a possible implementation, the method further includes: in response to a fourth operation performed by the user on a display page of the third notification, collapsing the third notification displayed on the lock screen interface of the first electronic device into the first notification.

In some embodiments, the fourth operation may be an operation that the user slides down on the lock screen interface of the first electronic device, an operation that the user taps a blank region on the lock screen interface of the first electronic device, or an operation that the user performs side swipe back on the lock screen interface of the first electronic device. The fourth operation may alternatively be another operation, for example, an operation preset by the user. This is not limited in this application.

In embodiments of this application, the user can collapse a current live notification through a specific operation, and collapsing of the live notification follows a principle of "go back to where you came from". In other words, the notification can be further switched between any two of the capsule state, the card state, and the immersive state. An interaction manner is simple and easy to use. Quick switching between any two notification presentation forms can well match live notification display requirements of a user in different use scenarios, so that user experience is improved.

With reference to the first aspect, in a possible implementation, the method further includes: in response to a fourth operation performed by the user on a display page of the second notification, collapsing the second notification displayed on the lock screen interface of the first electronic device into the first notification; or in response to the fourth operation performed by the user on a display page of the third notification, collapsing the third notification displayed on the lock screen interface of the first electronic device into the second notification.

In embodiments of this application, the user can collapse a current live notification through a specific operation, and collapsing of the live notification follows a principle of "go back to where you came from". In other words, the notification can be further switched between any two of the capsule state, the card state, and the immersive state. An interaction manner is simple and easy to use. Quick switching between any two notification presentation forms can well match live notification display requirements of a user in different use scenarios, so that user experience is improved.

With reference to the first aspect, in a possible implementation, the method further includes: in a case that a plurality of first live task processes exist on the first electronic device, when the status of the first electronic device is switched to the lock screen state, displaying a plurality of first notifications that are in one-to-one correspondence with the plurality of first live task processes on the lock screen interface of the first electronic device in a stacked manner.

In embodiments of this application, when a plurality of live task processes exist, and a plurality of live notifications are displayed in a capsule state on the lock screen interface, the plurality of live notifications are displayed in a stacked manner. In this way, lock screen display space can be occupied as small as possible, so that a personalized effect of the lock screen interface is fully presented.

With reference to the first aspect, in a possible implementation, the method further includes: in a case that a plurality of first live task processes exist on the first electronic device, displaying a plurality of second notifications that are in one-to-one correspondence with the plurality of first live task processes on the lock screen interface of the first electronic device in an expanded manner in a form of a card list.

In embodiments of this application, when a plurality of live task processes exist, and a plurality of live notifications are displayed in a card state on the lock screen interface, the plurality of live notifications are displayed in a form of a card list. In this way, the plurality of live task processes can be viewed on the lock screen interface at the same time, and a related shortcut operation can be performed, thereby improving user experience.

With reference to the first aspect, in a possible implementation, the card list includes a non-live notification card received by the first electronic device in the lock screen state.

In embodiments of this application, the non-live notification card and a live notification card can be simultaneously displayed on the lock screen interface. In this way, the user can view, by using the lock screen interface without unlocking, a currently running live task process and a notification message received by the electronic device in a lock screen period, and can perform a related shortcut operation, thereby improving user experience.

With reference to the first aspect, in a possible implementation, the method further includes: in a case that a plurality of first live task processes exist on the first electronic device, triggering, through a switching operation of the user, display switching between a plurality of third notifications that are in one-to-one correspondence with the plurality of first live task processes.

In some embodiments, the switching operation may be an operation that the user slides left on the display page of the third notification, or an operation that the user slides right on the display page of the third notification. The switching operation may alternatively be another operation, for example, an operation preset by the user. This is not limited in this application.

In embodiments of this application, when a plurality of live task processes exist, and a plurality of live notifications are displayed in an immersive state on the lock screen interface, switching between the plurality of live notifications may be implemented based on a specific operation of the user. In this way, the user can view the plurality of live task processes on the lock screen interface, and can perform a related shortcut operation, thereby improving user experience.

With reference to the first aspect, in a possible implementation, when a screen of the first electronic device displays the display page of the third notification, if the first electronic device receives a first message notification, an icon corresponding to the first message notification is displayed in a bottom region of the display page of the third notification, where the icon is used to remind the user that the first message is received, and is further used to provide a view entry of the first message for the user.

In embodiments of this application, in a case that a live notification on the lock screen interface is displayed in an immersive state, when the electronic device receives a notification message in a lock screen period, an application icon corresponding to the notification message may be displayed on a display interface of the live notification, to prompt the user that the notification message is received. In addition, an interface for viewing the notification message can be further displayed based on a tap operation of the user, and the user can view notification content and perform a related operation by using the lock screen interface without unlocking, so that user experience is improved.

With reference to the first aspect, in a possible implementation, the method includes: in a case that no live task process exists on the first electronic device, when the first electronic device receives a first message in the lock screen state, displaying a first message notification corresponding to the first message on the lock screen interface of the first electronic device, where the first message notification is presented in a capsule state.

In embodiments of this application, when the electronic device is in the lock screen state and no live task is ongoing, a received non-live notification (that is, a lock screen notification) can be presented in a capsule state, so that purity of the lock screen interface can be further improved. In addition, the user can further view corresponding message details on the lock screen interface in a first-unlocking manner, thereby improving user experience.

According to a second aspect, an electronic device is provided. The electronic device includes a memory and a processor, the memory is configured to store computer program code, and the processor is configured to execute the computer program code stored in the memory, to implement the method according to any one of the first aspect or the possible implementations of the first aspect.

According to a third aspect, a computer-readable storage medium is provided. The computer-readable storage medium stores a computer program or instructions. When the computer program or the instructions are executed, the method according to any one of the first aspect or the possible implementations of the first aspect is implemented.

According to a fourth aspect, a chip is provided. The chip stores instructions, and when the instructions are run on a device, the chip is enabled to perform the method according to any one of the first aspect or the possible implementations of the first aspect.

According to a fifth aspect, a computer program product is provided. The computer program product stores a computer program or instructions, and when the computer program or the instructions are executed, the method according to any one of the first aspect or the possible implementations of the first aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of an interface for displaying a live notification in a lock screen interface or on a home screen of an electronic device;
FIG. 4 is a diagram of another interface for displaying a live notification in a lock screen interface of an electronic device;
FIG. 5(a) to FIG. 5(c) are a diagram of interfaces corresponding to different notification presentation manners according to an embodiment of this application;
FIG. 6 is a diagram of composition of a capsule-state notification according to an embodiment of this application;
FIG. 7(a) to FIG. 7(d) are a diagram of displaying a capsule-state notification in several different scenarios according to an embodiment of this application;
FIG. 8(a) to FIG. 8(d) are a diagram of displaying a card-state notification in several different scenarios according to an embodiment of this application;
FIG. 9(a) to FIG. 9(c) are a diagram of a corresponding interface for viewing a card-state notification according to an embodiment of this application;
FIG. 10(a) to FIG. 10(d) are a diagram of displaying an immersive-state notification in several different scenarios according to an embodiment of this application;
FIG. 11(a) and FIG. 11(b) are a diagram of a display page of an immersive-state notification according to an embodiment of this application;
FIG. 12(a) to FIG. 12(c) are a diagram of an interface corresponding to a process of switching a notification between a capsule state and a card state according to an embodiment of this application;
FIG. 13(a) to FIG. 13(c) are a diagram of an interface corresponding to a process of switching a notification between a card state and an immersive state according to an embodiment of this application;
FIG. 14(a) to FIG. 14(c) are a diagram of an interface corresponding to a process of switching a notification between a capsule state and an immersive state according to an embodiment of this application;
FIG. 15(a) to FIG. 15(c) are a diagram of a corresponding interface for switching from an immersive-state notification display interface to a card list display interface according to an embodiment of this application;
FIG. 16(a) and FIG. 16(b) are a diagram of a corresponding lock screen interface when there is no live notification task process on an electronic device according to an embodiment of this application;
FIG. 17(a) and FIG. 17(b) are a diagram of another corresponding lock screen interface when there is no live notification task process on an electronic device according to an embodiment of this application;
FIG. 18(a) to FIG. 18(c) are a diagram of another corresponding lock screen interface when there is no live notification task process on an electronic device according to an embodiment of this application;
FIG. 19(a) to FIG. 19(c) are a diagram of a presentation manner of a live notification displayed on a lock screen interface when a tablet device is in a lock screen state according to an embodiment of this application;
FIG. 20 is a schematic flowchart of a notification display method according to an embodiment of this application;
FIG. 21 is a schematic flowchart of another notification display method according to an embodiment of this application; and
FIG. 22 is a diagram of functional modules of a notification display apparatus according to an embodiment of this application.

### DESCRIPTION OF EMBODIMENTS

The following describes technical solutions of this application with reference to accompanying drawings. It is clear that the described embodiments are merely some but not all of embodiments of this application.

The following describes technical solutions in embodiments of this application with reference to the accompanying drawings in embodiments of this application. In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the description in embodiments of this application, "a plurality of" means two or more than two.

The following terms "first" and "second" are merely used for description, but should not be understood as indicating or implying relative importance or implying a quantity of indicated technical features. Therefore, a feature limited by "first" or "second" may explicitly or implicitly include one or more features. In descriptions of the embodiments, unless otherwise stated, "a plurality of" means two or more.

The terms used in the following embodiments are merely used for describing specific embodiments, and are not intended to limit this application. The singular forms "one", "a", "the", "the foregoing", "this", and "the one" used in this specification and the appended claims of this application are also intended to include forms such as "one or more", unless otherwise clearly specified in the context. It should be further understood that, in the following embodiments of this application, "at least one" and "one or more" mean one, two, or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects.

Reference to "an embodiment", "some embodiments", or the like described in this specification means that specific features, structures, or characteristics described with reference to the embodiment are included in one or more embodiments of this application. Therefore, the statements "an embodiment", "some embodiments", "another embodiment", "some other embodiments", and the like that appear in different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

A method provided in embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

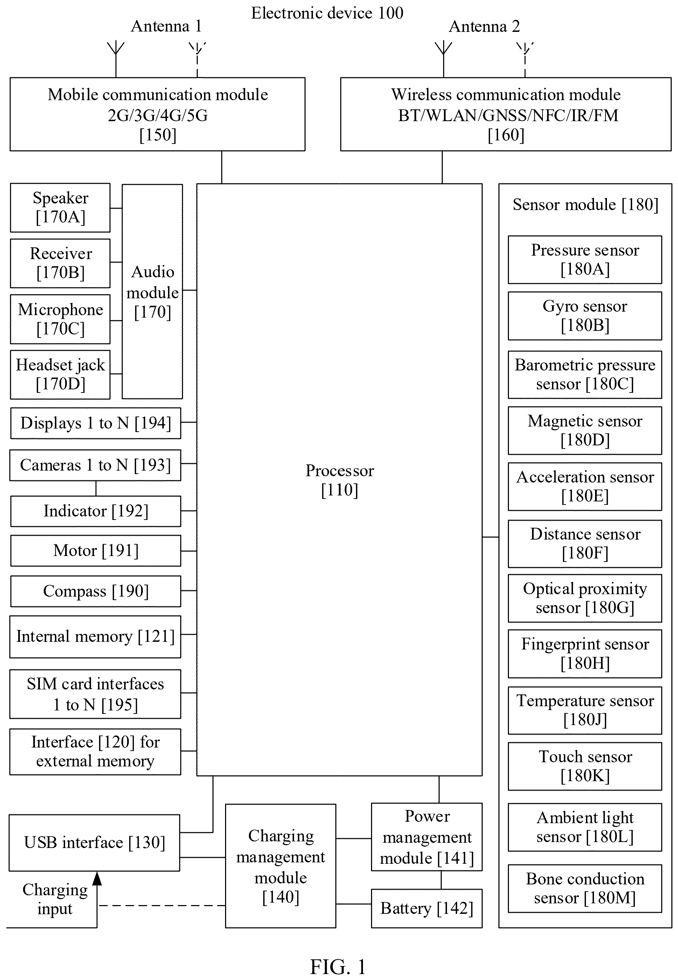

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset. The interface may alternatively be configured to connect to another electronic device, such as an AR device.

It may be understood that the interface connection relationship between the modules shown in this embodiment of this application is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

The interface 120 for external memory may be configured to connect to an external memory card, such as a micro SD card, to extend a storage capability of the electronic device 100. The external memory card communicates with the processor 110 through the interface 120 for external memory, to implement a data storage function. For example, files such as music or videos are stored in the external memory card.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, an app required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS).

The electronic device 100 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the electronic device 100. In some other embodiments, two microphones 170C may be disposed on the electronic device 100. In addition to sound signal collection, a noise reduction function may be further implemented. In some other embodiments, three, four, or more microphones 170C may be alternatively disposed on the electronic device 100, to collect a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive button input, and generate button signal input related to user settings and function control of the electronic device 100.

The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. Different application scenarios (for example, a time reminder, information receiving, an alarm clock, and a game) may also be corresponding to different vibration feedback effects. A touch vibration feedback effect may be further customized.

The indicator 192 may be an indicator light, and may indicate a charging status or a power change, or may indicate a message, a missed call, a notification, or the like.

The SIM card interface 195 is configured to connect to a SIM card. The SIM card may be inserted into the SIM card interface 195 or pulled out of the SIM card interface 195, to implement contact with or separation from the electronic device 100. The electronic device 100 may support one or N SIM card interfaces, and N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using a SIM card, to implement functions such as conversation and data communication. In some embodiments, the electronic device 100 uses an embedded-SIM (embedded-SIM, eSIM) card, that is, an embedded SIM card. The eSIM card may be embedded in the electronic device 100, and cannot be separated from the electronic device 100.

It should be understood that a phone card in embodiments of this application includes but is not limited to a SIM card, an eSIM card, a universal subscriber identity module (universal subscriber identity module, USIM) card, a universal integrated circuit card (universal integrated circuit card, UICC), or the like.

A software system of the electronic device 100 may use a layered architecture, an event-driven architecture, a microkernel architecture, a micro-service architecture, or a cloud architecture. In this embodiment of this application, an Android system with a layered architecture is used as an example to describe the software structure of the electronic device 100.

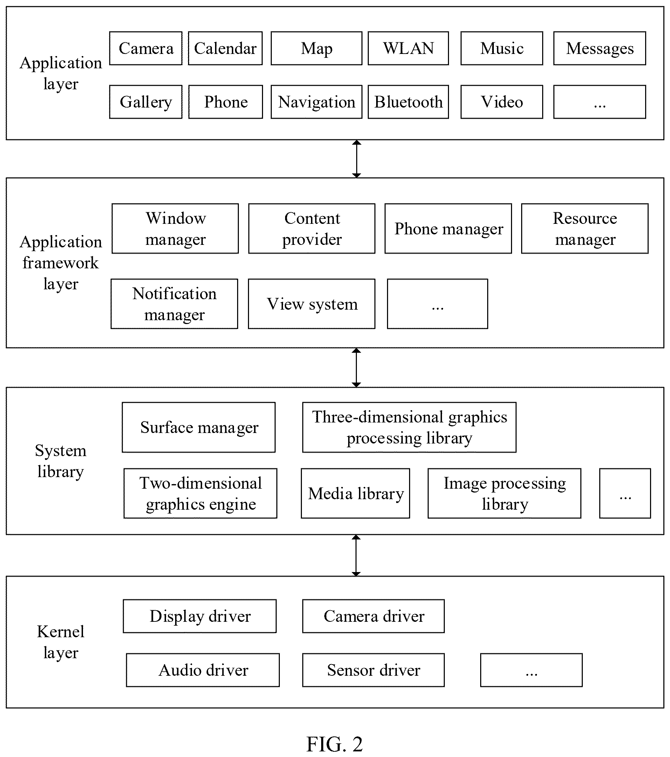

FIG. 2 is a block diagram of a software structure of the electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage window programs. The window manager may obtain a display size, determine whether there is a status bar, lock a screen, take a screenshot, and the like.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function of the electronic device 100, for example, call status management (including accepting and declining).

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, an alert tone is made, the electronic device vibrates, or an indicator blinks.

The Android runtime includes a core library and a virtual machine. The Android runtime is responsible for scheduling and management of the Android system.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and Harmony.

The technical solutions in embodiments of this application may be applied to, for example, an electronic device having a display function. For example, the technical solutions may be applied to a television set, a desktop computer, a notebook computer, or an in-vehicle screen, or may be applied to a portable electronic device such as a mobile phone, a foldable display, a tablet computer, a camera, a video camera, a video recorder, a watch, or a band, or may be applied to another electronic device having a display function, or may be applied to an electronic device in a 5G network or an electronic device in a future evolved public land mobile network (public land mobile network, PLMN). A main application scenario may be a notification display scenario of the electronic device, for example, a notification display scenario of the electronic device when the electronic device is in a lock screen state.

To understand the solutions of this application more clearly, the following first describes related terms in embodiments of this application.

### 1. Capsule-state notification

The capsule-state notification is a notification displayed in a capsule state of a live window. When an application is switched to a home screen or another application, the live window in the capsule state appears in a status bar, and displays brief information, such as call duration or countdown duration of a timer, about a current task in real time. When a plurality of tasks are in the capsule state, live windows are comprehensively sorted based on task priorities and creation time.

In the capsule state, most critical information content is presented, and a shortcut operation button is provided. If necessary, current content may be quickly operated by using a capsule-state notification, for example, music may be paused/played. The capsule occupies a small area, so that blocking of content such as a lock screen wallpaper is avoided to a maximum extent, and a task can be quickly operated.

### 2. Card-state notification

The card-state notification is a notification displayed in a card state of a live window. For example, if a notification displayed in a capsule state of the live window (that is, a capsule-state notification) is tapped, the capsule-state notification is expanded into a card-state notification. Compared with the notification displayed in the capsule state, the card-state notification can be used to view more detailed information related to the notification, or quickly perform a related operation. In other words, compared with the capsule-state notification, the card-state notification can present more content, and provide more operation content. For example, when a non-button region of the card-state notification is tapped, an application interface corresponding to the notification may be directly displayed to perform more operations. When a blank region is tapped or the live window in the card state is slid up, the live window may be collapsed, and automatically switched to the capsule state.

### 3. Immersive-state notification

The immersive-state notification is a notification displayed in an immersive state of a live window and may be presented in full screen. Compared with a notification displayed in a card state, the notification displayed in the immersive state allows a user to view more information. If the user currently wants to focus on a task corresponding to the live notification, switching the notification to an immersive-state presentation manner can obtain information and expand an operation range to a maximum extent without being affected by another element. Further, there is no need to frequently perform operations such as unlocking, entering a home screen, and opening an application interface, and a current task flow can be focused on by using a lock screen interface.

It should be noted that, compared with the card-state notification, the immersive-state notification has a specific full screen display effect. For example, a background interface uses a color, a picture, or the like related to current notification information, so that the user can perceive more information about the notification, and there may further be more operation controls. However, it is not limited that a current lock screen interface cannot display other information. In some embodiments, if there is an immersive-state notification on the current lock screen interface, another notification is not displayed, but common lock screen information such as a clock and a date may still be displayed. In some other embodiments, even if there is an immersive-state notification on the current lock screen interface, another notification may be displayed in a relatively small form at a partial position on the current lock screen interface (for example, displayed in the foregoing capsule state), or indication information indicating that there is another notification is displayed, to remind the user that there is another notification.

In addition, in some embodiments, even if an immersive-state notification is displayed on the current lock screen interface, an update of another important notification is not hindered. For example, when an immersive-state notification is currently displayed on the lock screen interface, if a notification with a higher importance level is newly received or there is update information of a notification with a higher importance level, the immersive-state notification mode may be automatically exited, and the new notification or an update of the notification is displayed; or the new notification or the update information of the notification is displayed in an overlay manner at an upper layer of a page of the immersive-state notification.

A screen locking function of an electronic device is an important function for protecting content on the electronic device after a user ends a task on the electronic device. A main function of screen locking is to protect security of information stored by the user in the electronic device.

As the user has an increasingly high requirement for a personalized lock screen interface, the user not only expects to decorate a home screen effect of the electronic device, but also expects to customize lock screen content, so that the screen locking function of the electronic device can present a personal feature while protecting information security. In addition, in this fast-paced and information-overloaded era, when the user uses various electronic devices, a live task, for example, a flight status, running on the electronic device has extremely strong timeliness. The user has a strong need to track and view such notifications in a timely manner. However, after the electronic device performs a screen locking operation, the electronic device usually ends use of the task. If the user wants to view a progress of the real-time task at any time, the user needs to frequently perform unlocking to enter a home screen to view the progress. This leads to poor user experience.

Therefore, the user has an increasingly high requirement for quickly obtaining more real-time information on the lock screen interface.

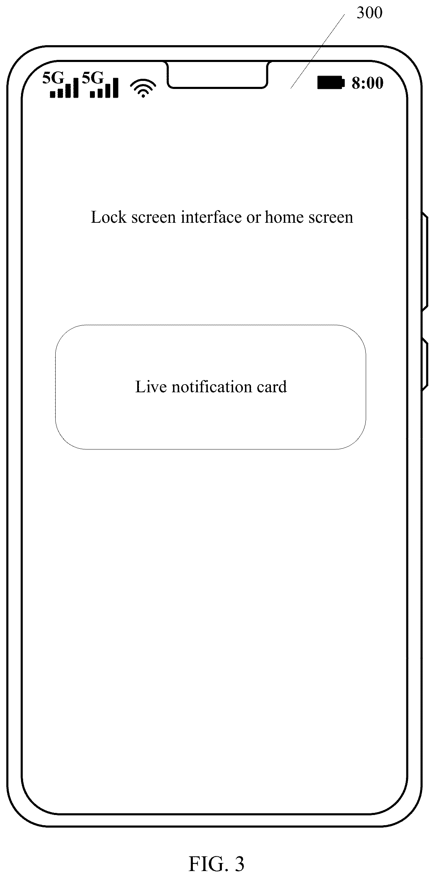

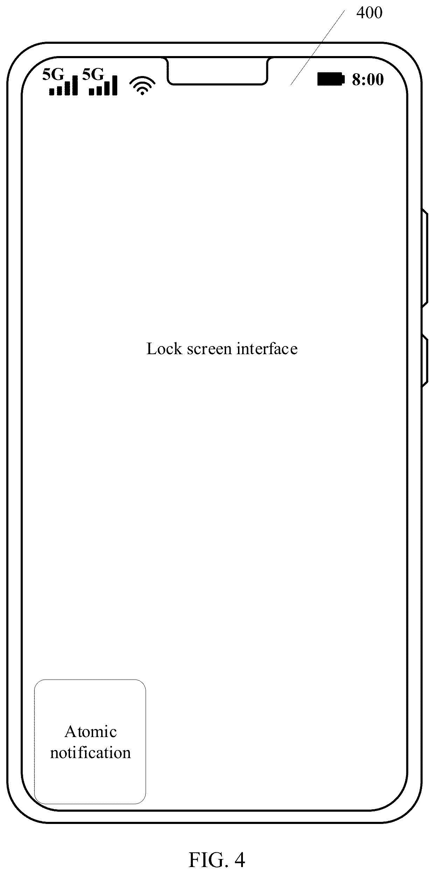

The following describes diagrams of two existing notification display interfaces with reference to FIG. 3 and FIG. 4.

FIG. 3 is a diagram of an interface for displaying a live notification in a lock screen interface or on a home screen of an electronic device.

As shown in FIG. 3, in a case that a display of an electronic device 300 displays a lock screen interface or a home screen, when a live task is running on the electronic device 300, a live notification is displayed on the display of the electronic device 300 in a form of a card, that is, a live notification card is displayed, and a process and a status of a corresponding real-time activity are displayed on the live notification card.

In the notification display method, when an electronic device is in a lock screen state, a live task running on the electronic device is presented in a lock screen interface in a form of a live notification card. In addition, the live notification card presented in the lock screen interface is resident in the lock screen interface, or display of the live notification card is canceled by using a remove operation of a user. In other words, a pure effect of the lock screen interface cannot be ensured by collapsing the live notification card, but can be ensured through only removal. However, once the live notification card is removed from the lock screen interface, it needs to take a long path or wait for a corresponding live task update to display the live notification card again. In addition, some live notification cards (for example, a live notification card for playing music) do not support a remove operation, and are resident on the lock screen interface, affecting purity of the lock screen interface. In addition, when a plurality of live tasks are performed on the electronic device at the same time, a plurality of live notification cards are displayed in tile mode. This causes large-area blocking on personalized content displayed in the lock screen interface, and occupies presentation space of a non-live notification (for example, a lock screen notification).

FIG. 4 is a diagram of another interface for displaying a live notification in a lock screen interface of an electronic device.

As shown in FIG. 4, in a case that a display of an electronic device 400 displays a lock screen interface, when a live task is running on the electronic device 400, an atomic notification is displayed in the lock screen interface of the electronic device 400, and content of the atomic notification includes simplified live task notification information.

In the notification display method, the atomic notification is displayed in a fixed window, a window size is fixed, and only a display function and a function of tapping to enter an application corresponding to the notification are provided. Content displayed in the atomic notification is provided by a third-party developer for a user. The displayed content is simplified and fixed, and only a single-point information prompt is provided. The user cannot obtain more notification content in the lock screen interface, presentation of richer content is not supported, and a related shortcut operation is not supported.

Therefore, in a current notification display method, display of notification content from a live task and notification information received in a lock screen period occupies a relatively large area of lock screen space. As a result, personalized content of a user on a lock screen interface is severely blocked. In addition, some live notification cards occupy lock screen space of an electronic device and cannot be removed or collapsed. This greatly affects aesthetics of the lock screen interface. In another current notification display method, a window (that is, an atomic notification) of a fixed size is set on a lock screen interface to display a live notification, and only a function of displaying simplified content and a function of tapping to enter an application are provided. A user cannot obtain more notification content on the lock screen interface. Consequently, when an electronic device displays a notification, a personalized display effect of a lock screen interface cannot be well balanced, and a pure lock screen and obtaining a real-time progress of an important notification cannot be simultaneously implemented.

In view of this, embodiments of this application provide a notification display method and an electronic device. According to the method and the electronic device, when a user receives a live notification with relatively high timeliness by using an electronic device, and a screen of the electronic device displays a lock screen interface or a home screen, the live notification is displayed on the lock screen interface or the home screen of the electronic device, and the user can quickly obtain current live notification information on the lock screen interface or the home screen, and can process a live notification presentation manner to freely switch the live notification presentation manner (capsule state-card state-immersive state). Different presentation manners correspond to different degrees of information content presentation. The user needs only to perform a simple interaction operation to switch the live notification presentation manner, thereby satisfying a plurality of requirements of the user. For example, different requirements of the user in a lock screen scenario can be satisfied. If the user wants a purer lock screen interface effect, the current live notification may be collapsed, so that the live notification is presented in a capsule state. If the user wants to view more information, the user may perform an interaction operation to switch the live notification to be presented in a card state. If the user wants to focus on a current task, that is, focus on the current live notification, the user may perform an interaction operation to switch the live notification to be presented in full screen in an immersive state. In this way, the user can quickly switch between different live notification presentation manners based on a requirement of the user by performing a simple interaction operation.

It should be noted that in embodiments of this application, an example in which the electronic device is a mobile phone is used for description. However, this does not constitute a limitation on a type of an electronic device to which the solutions of this application can be applied. The electronic device may alternatively be any electronic device having a screen display function, such as a tablet, a notebook computer, a PC screen, an in-vehicle screen, or a band. This is not limited in this application.

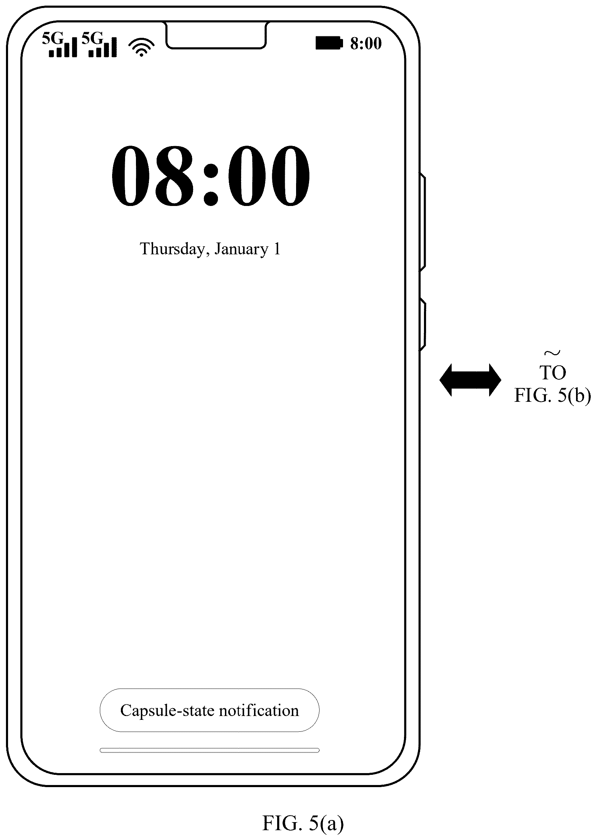

For example, FIG. 5(a) to FIG. 5(c) are a diagram of interfaces corresponding to different notification presentation manners according to an embodiment of this application.

FIG. 5(a) is a diagram of an interface in which a notification is presented in a capsule state according to an embodiment of this application. As shown in FIG. 5(a), the capsule-state notification is in a shape similar to a capsule, may be displayed at the bottom of a screen of an electronic device, occupies a small area, can provide key information and a key operation button for a user, and can provide a quick operation service while a convenient operation is provided for the user. Because the capsule-state notification occupies a small area, personalized content on a lock screen can be presented to a maximum extent, improving purity of a lock screen interface.

In some embodiments, the user may change a display position of the capsule-state notification through pressing and dragging or the like.

In some embodiments, when a plurality of capsule-state notifications exist at the same time, the plurality of capsule-state notifications are displayed in a stacked manner. For example, a latest refreshed notification may be displayed at an uppermost layer.

In some embodiments, the user may perform display switching between the plurality of capsule-state notifications by performing a leftward sliding operation or a rightward sliding operation.

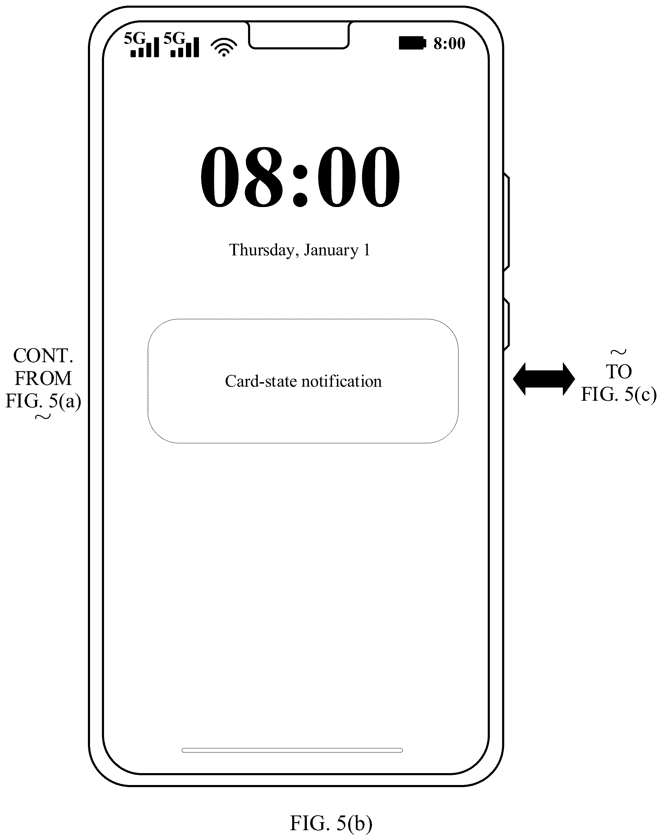

FIG. 5(b) is a diagram of an interface in which a notification is presented in a card state according to an embodiment of this application. As shown in FIG. 5(b), the card-state notification is displayed on a lock screen interface of an electronic device in a card form with a relatively large size. Compared with the capsule-state notification, the card-state notification can present more key information and key operation buttons to a user, to facilitate a shortcut operation of the user.

In some embodiments, when a live notification is presented in a card state, the live notification may be displayed on a screen of the electronic device in a form of a card list together with another non-live notification received by the electronic device.

In some embodiments, the user may change a display position of the card-state notification through pressing and dragging or the like.

In some embodiments, when a plurality of card-state notifications exist at the same time, the plurality of card-state notifications are sequentially displayed in a card list in a refresh sequence. For example, a latest refreshed notification may be displayed in a first row of the card list.

In some embodiments, when a plurality of card-state notifications exist at the same time, the plurality of card-state notifications are displayed in a stacked manner. For example, a latest refreshed notification may be displayed at an uppermost layer. The user may further perform display switching between the plurality of card-state notifications by performing a leftward sliding operation or a rightward sliding operation.

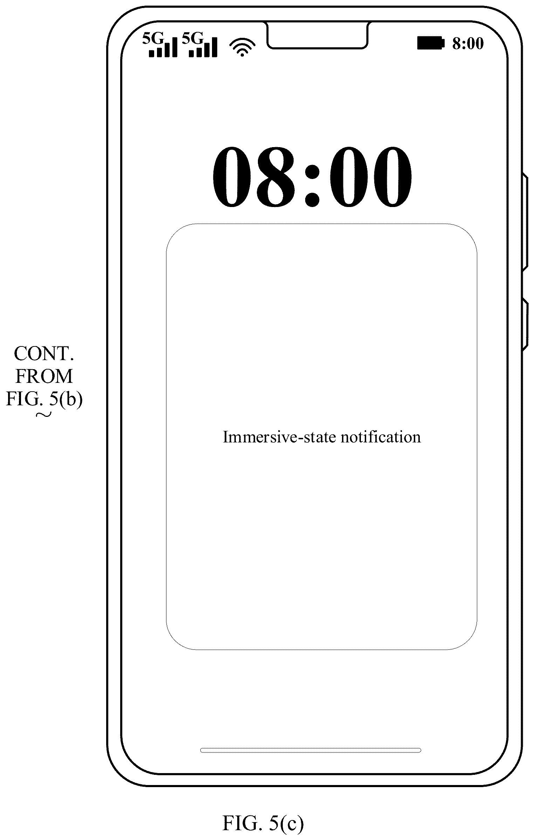

FIG. 5(c) is a diagram of an interface in which a notification is presented in an immersive state according to an embodiment of this application. As shown in FIG. 5(c), the immersive-state notification may be presented in a full screen form, or may occupy an area of a large part of a display, and a display effect is purer. If a user wants to focus on a current live task, the user may switch a notification corresponding to the live task to be presented in an immersive state, so that key information of the live task may be presented on a lock screen interface in a full screen form. The user can directly process the current live task immersively on the lock screen interface, and can obtain a large amount of key information and operation entries without frequently performing unlocking to enter a home screen.

In some embodiments, when the immersive-state notification is presented in a full screen form, a display background of the electronic device is switched to a background that matches the immersive-state notification, for example, may be switched to a background that is the same as a main image of the immersive-state notification.

In some embodiments, the user may change a display position of the immersive-state notification through pressing and dragging.

In some embodiments, when a plurality of immersive-state notifications exist at the same time, the plurality of immersive-state notifications are sequentially displayed in an immersive-state notification list in a refresh sequence. For example, a latest refreshed notification may be arranged in the first place of the immersive-state notification list, or an arrangement sequence may be fixed. The user may perform display switching between the plurality of immersive-state notifications by performing an upward sliding operation or a downward sliding operation, or performing a leftward sliding operation or a rightward sliding operation.

In some embodiments, when a plurality of immersive-state notifications exist at the same time, the plurality of immersive-state notifications are displayed in a stacked manner. For example, a latest refreshed notification may be displayed at an uppermost layer. The user may further perform display switching between the plurality of immersive-state notifications by performing a leftward sliding operation or a rightward sliding operation.

For a live notification displayed on the display of the electronic device, the user may switch the live notification between different presentation manners by performing an interaction operation.

In some embodiments, the user may perform a first operation on the lock screen interface shown in FIG. 5(a), to expand the capsule-state notification into the card-state notification shown in FIG. 5(b). The first operation may be, for example, an operation that the user slides up on the lock screen interface shown in FIG. 5(a), or an operation that the user taps a text region of the capsule-state notification, or another operation, such as an operation preset by the user. This is not limited in this application.

In some embodiments, the user may perform a second operation on the lock screen interface shown in FIG. 5(b), to expand the card-state notification into the immersive-state notification shown in FIG. 5(c). The second operation may be, for example, an operation that the user taps the card-state notification on the lock screen interface shown in FIG. 5(b), or an operation that the user touches and holds the card-state notification, or another operation, such as an operation preset by the user. This is not limited in this application.

In some embodiments, the user may perform a third operation on the lock screen interface shown in FIG. 5(a), to expand the capsule-state notification into the immersive-state notification shown in FIG. 5(c). The third operation may be, for example, an operation that the user taps a main image region of the capsule-state notification on the lock screen interface shown in FIG. 5(a), or an operation that the user touches and holds the capsule-state notification, or another operation, such as an operation preset by the user. This is not limited in this application.

In some embodiments, the user may perform a fourth operation on the lock screen interface shown in FIG. 5(b), to collapse the card-state notification into the capsule-state notification shown in FIG. 5(a). The fourth operation may be, for example, an operation that the user taps a blank region outside the card-state notification on the lock screen interface shown in FIG. 5(b), or an operation that the user performs side swipe back on the lock screen interface shown in FIG. 5(b), or another operation, such as an operation preset by the user. This is not limited in this application.

In some embodiments, the user may perform a fourth operation on the lock screen interface shown in FIG. 5(c), to collapse the immersive-state notification into the card-state notification shown in FIG. 5(b). The fourth operation may be, for example, an operation that the user taps a blank region outside the immersive-state notification on the lock screen interface shown in FIG. 5(c), or an operation that the user performs side swipe back on the lock screen interface shown in FIG. 5(c), or another operation, such as an operation preset by the user. This is not limited in this application.

In some embodiments, when the card-state notification or the immersive-state notification is collapsed, a principle of "go back to where you came from" is followed. To be specific, if a notification is expanded from a capsule state to a card state, a notification presentation manner falls back to the capsule state when the card-state notification is collapsed; if a notification is expanded from a card state to an immersive state, a notification presentation manner falls back to the card state when the immersive-state notification is collapsed; or if a notification is expanded from a capsule state to an immersive state, a notification presentation manner falls back to the capsule state when the immersive-state notification is collapsed.

In some embodiments, on different electronic devices, because screen sizes of different electronic devices may be different, when a notification is presented on different electronic devices in a capsule state, a card state, or an immersive state, display adaptation is automatically performed on a corresponding electronic device, so that a presentation effect of the notification is adapted to a screen size of the current electronic device. For example, on an electronic device with a relatively wide display size, such as a foldable display/tablet, a capsule-state notification is transversely extended for adaptation, so that the capsule-state notification can be adapted to a screen size of the current electronic device, and richer notification content can be displayed.

In embodiments of this application, a manner of presenting a notification task on a lock screen interface or a home screen is provided. The method supports presentation of notification tasks in different forms (a capsule state, a card state, and an immersive state), and can implement mutual switching between notification tasks in different presentation forms, to satisfy notification display requirements of a user in different scenarios. For example, when the user wants a purer personalized lock screen display effect, a capsule-state notification may be used. When the user wants to obtain more key information of a notification or perform more quick operations, a card-state notification may be used. When the user wants to better focus on a current notification task, an immersive-state notification may be used. In this way, it can be ensured to a greater extent that a personalized effect of a lock screen is fully presented, and the user can quickly obtain key information of a notification without unlocking an electronic device or entering an application page, and can further perform a shortcut operation. In addition, the user can focus on current notification processing on the lock screen interface or the home screen, and can obtain more detailed notification information and perform more shortcut operations without frequently performing unlocking to enter the home screen or frequently entering an application.

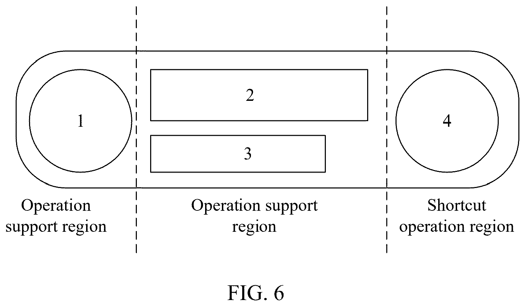

For example, with reference to FIG. 6 to FIG. 10(a) to FIG. 10(d), the following describes in detail three notification presentation forms provided in embodiments of this application.

For example, FIG. 6 is a diagram of composition of a capsule-state notification according to an embodiment of this application.

As shown in FIG. 6, the capsule-state notification mainly includes four composition regions. The four composition regions respectively correspond to a region 1, a region 2, a region 3, and a region 4 shown in FIG. 6. The region 1 is used to display a main image or a source icon of the notification. For example, when the notification is a live music notification, the region 1 may be a cover of music that is being played currently, or may be an icon of a music application. The region 2 is used to display a main text region of the notification. The region 3 is used to display a secondary text region of the notification. For example, when the notification is a live music notification, a main text displayed in the region 2 may be a name of music that is being played currently, and a secondary text displayed in the region 3 may be information such as a singer and a language corresponding to the music that is being played currently. The region 4 is a shortcut operation region corresponding to the notification, and a shortcut operation button corresponding to the notification is displayed in the region. For example, when the notification is a live music notification, an operation button used to control playing/pausing of current music is displayed in the region 4.

In addition, the region 1, the region 2, and the region 3 are operation support regions. For example, the user may tap the region 1 to enter an application corresponding to the notification, and the user may further tap the region 2 or the region 3 to expand the notification from the capsule state to a card state or an immersive state.

It should be understood that an operation manner corresponding to the operation support region and a function triggered by the operation manner are not limited in embodiments of this application.

It should be understood that FIG. 6 shows only illustrative descriptions of composition of the capsule-state notification, and does not limit specific composition of the capsule-state notification. Composition regions included in the capsule-state notification may be further deleted or increased based on the four regions, and arrangement manners and sizes of these composition regions are not limited. In addition, in the foregoing embodiment, the live music notification is used as an example for description, but this does not constitute any limitation on a notification category. When notification categories are different, corresponding main images, source icons, main and secondary texts, and shortcut operations may be different.

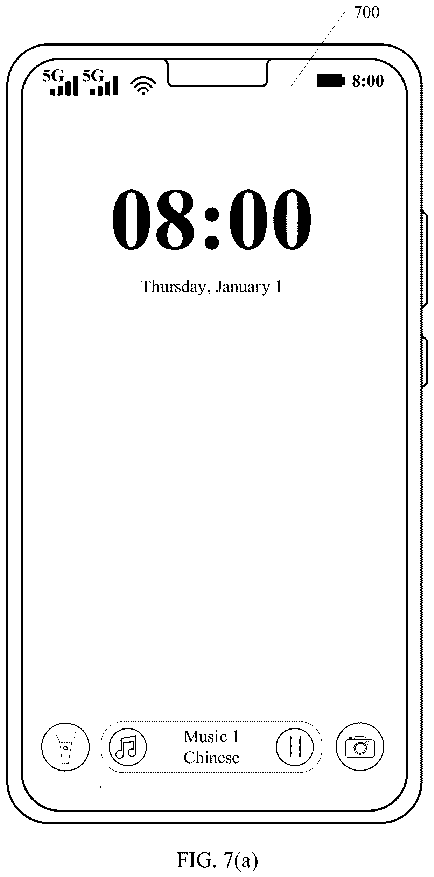

For example, FIG. 7(a) to FIG. 7(d) are a diagram of displaying a capsule-state notification in several different scenarios according to an embodiment of this application.

FIG. 7(a) shows a music notification presented in a capsule state on a lock screen interface according to an embodiment of this application. As shown in FIG. 7(a), the music notification presented in the capsule state is located at the bottom of the lock screen interface of an electronic device 700, occupies a very small area of the lock screen interface, and does not affect display of a personalized design of the lock screen interface. The music notification presented in the capsule state may include, for example, a music icon, a main text "Music 1", a secondary text "Chinese", and an operation button used to control music playing/pausing. The user may learn, by using the music notification presented in the capsule state, of information such as a name of music that is currently being played by the electronic device 700, and may further conveniently control playing and pausing of the music.

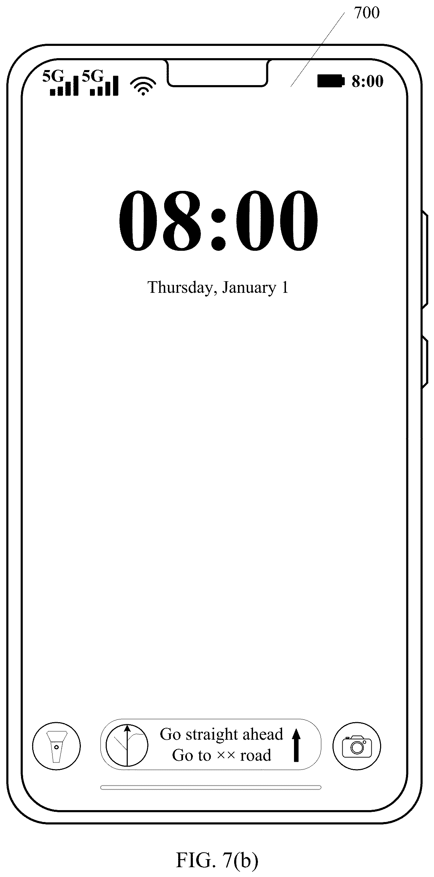

FIG. 7(b) shows a navigation notification presented in a capsule state on a lock screen interface according to an embodiment of this application. As shown in FIG. 7(b), the navigation notification presented in the capsule state is located at the bottom of the lock screen interface of an electronic device 700, occupies a very small area of the lock screen interface, and does not affect display of a personalized design of the lock screen interface. The navigation notification presented in the capsule state may include, for example, a navigation main image, a main text "Go straight ahead", a secondary text "Go to ×× road", and a shortcut operation button. Through the shortcut operation button, a user may perform an operation such as switching a route. The user may learn, by using the navigation notification presented in the capsule state, of a real-time progress of a navigation task that is currently being executed by the electronic device 700.

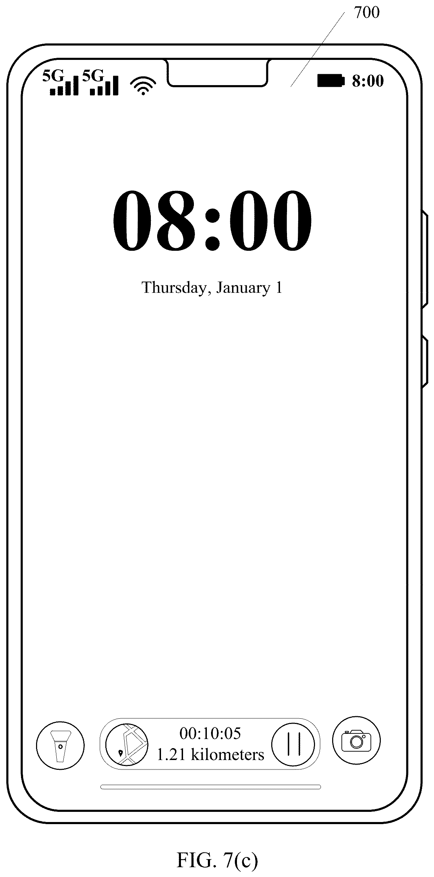

FIG. 7(c) shows an exercise notification presented in a capsule state on a lock screen interface according to an embodiment of this application. As shown in FIG. 7(c), the exercise notification presented in the capsule state is located at the bottom of the lock screen interface of an electronic device 700, occupies a very small area of the lock screen interface, and does not affect display of a personalized design of the lock screen interface. The exercise notification presented in the capsule state may include, for example, an exercise track main image, a main text "00:10:05", a secondary text "1.21 kilometers", and an operation button used to control starting/pausing of exercise timing. A user may learn, by using the exercise notification presented in the capsule state, of a real-time progress of an exercise recording task that is currently being executed by the electronic device 700, can learn of a current exercise progress, and may further conveniently control starting and pausing of exercise timing.

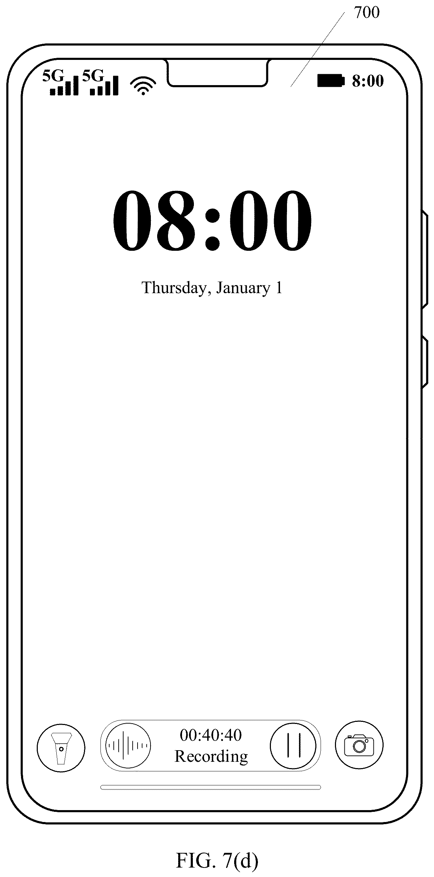

FIG. 7(d) shows a recording notification presented in a capsule state on a lock screen interface according to an embodiment of this application. As shown in FIG. 7(d), the recording notification presented in the capsule state is located at the bottom of the lock screen interface of an electronic device 700, occupies a very small area of the lock screen interface, and does not affect display of a personalized design of the lock screen interface. The recording notification presented in the capsule state may include, for example, a main image of real-time audio of recording, a main text "00:40:40", a secondary text "Recording", and an operation button used to control recording starting/pausing. A user may learn, by using the recording notification presented in the capsule state, of a real-time progress of a recording task that is currently being executed by the electronic device 700, and may further conveniently control starting and pausing of the recording task.

In some embodiments, when a plurality of live tasks are performed on the electronic device 700 at the same time, and the electronic device 700 is in a lock screen state, a plurality of live notifications corresponding to the plurality of live tasks are displayed in a capsule-state presentation form in a stacked manner. A latest refreshed live notification may be displayed at an uppermost layer of the stacked notifications, a live notification with strongest timeliness may be displayed at an uppermost layer of the stacked notifications, or the plurality of live notifications may be displayed in turn at an uppermost layer of the stacked notifications. This is not limited in this application.

In some embodiments, the user may perform display switching between the plurality of stacked capsule-state notifications by performing a leftward sliding operation or a rightward sliding operation.

In an example, when the user performs a leftward sliding operation at a position of the music notification on an interface shown in FIG. 7(a), a display interface of the electronic device may be switched to an interface shown in FIG. 7(b), that is, switching from the music notification to the navigation notification is completed.

In some embodiments, when a task process corresponding to a notification ends, the notification displayed on the lock screen interface disappears accordingly.

In an example, a music task, a navigation task, an exercise recording task, and a recording task on the electronic device 700 are performed simultaneously. When the electronic device 700 is in a lock screen state, a capsule-state notification is displayed at a bottom position of the lock screen interface of the electronic device 700. The capsule-state notification may be a music notification, a navigation notification, an exercise notification, and a recording notification that are displayed in turn, or may be a latest refreshed live notification displayed at an uppermost layer. For example, a current display interface of the electronic device 700 is shown in FIG. 7(a). When the navigation task is refreshed, the display interface of the electronic device 700 is switched to that shown in FIG. 7(b). When the user achieves an exercise distance goal of 2 kilometers, the exercise recording task ends, and the exercise notification displayed on the lock screen interface disappears accordingly.

In some embodiments, a plurality of simultaneously existing capsule-state notifications may be simultaneously displayed on the lock screen interface of the electronic device, or some of the simultaneously existing capsule-state notifications may be simultaneously displayed on the lock screen interface of the electronic device.

It should be understood that a screen of the electronic device in this embodiment of this application displays the lock screen interface, including that the screen of the electronic device displays a lock screen wallpaper display page, or including that the screen of the electronic device displays an always on display wallpaper display page.

It should be noted that in this embodiment of this application, an example in which the screen of the electronic device displays the lock screen interface is used for description. In some embodiments, the screen of the electronic device may alternatively display a home screen.

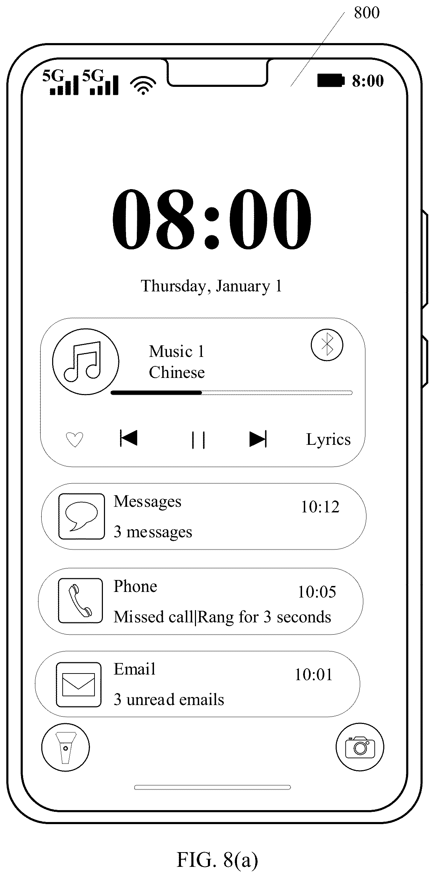

For example, FIG. 8(a) to FIG. 8(d) are a diagram of displaying a card-state notification in several different scenarios according to an embodiment of this application.

FIG. 8(a) shows a music notification presented in a card state on a lock screen interface according to an embodiment of this application. As shown in FIG. 8(a), the music notification presented in the card state is located in a middle region of the lock screen interface of an electronic device 800. The music notification presented in the card state may include, for example, a music source icon, a main text, a secondary text, and one or more shortcut operation buttons. Compared with a music notification presented in a capsule state, the music notification presented in the card state can display richer notification information. For example, display space of the main text and the secondary text is larger, more content can be displayed, and more shortcut operations are supported. For example, in addition to a play/pause operation, a song switching operation, an add-to-favorites operation, a lyric display operation, and the like may be further quickly performed. The live music notification card and a non-live notification (for example, a message notification, a phone notification, or an email notification) received by the electronic device 800 in a lock screen period may be simultaneously displayed on the lock screen interface of the electronic device 800 in a form of a card list.

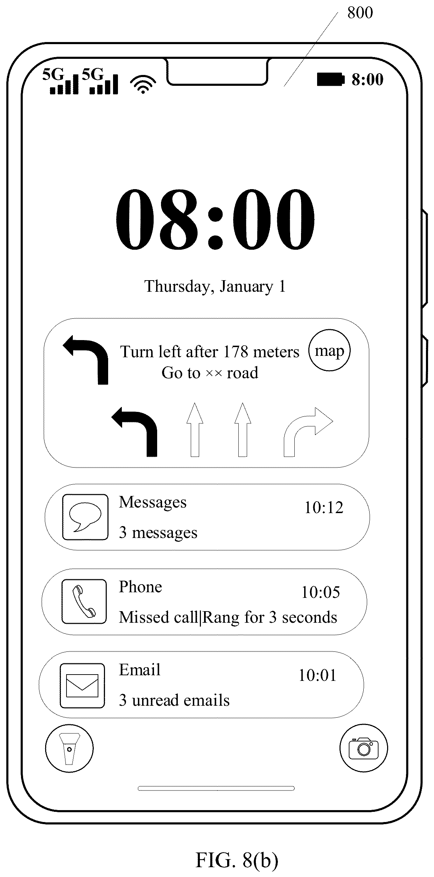

FIG. 8(b) shows a navigation notification presented in a card state on a lock screen interface according to an embodiment of this application. As shown in FIG. 8(b), the navigation notification presented in the card state is located in a middle region of the lock screen interface of an electronic device 800. The navigation notification presented in the card state may include, for example, a navigation main image, a main text, a secondary text, and one or more shortcut operation buttons. Compared with a navigation notification presented in a capsule state, the navigation notification presented in the card state can display richer notification information. For example, display space of the main text and the secondary text is larger, more content can be displayed, and current lane information and the like can be further displayed. The live navigation notification card and a non-live notification (for example, a message notification, a phone notification, or an email notification) received by the electronic device 800 in a lock screen period may be simultaneously displayed on the lock screen interface of the electronic device 800 in a form of a card list.

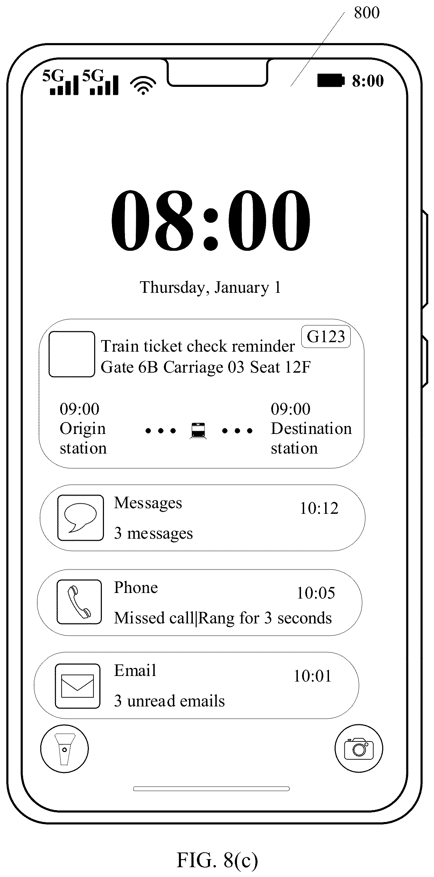

FIG. 8(c) shows a train status notification presented in a card state on a lock screen interface according to an embodiment of this application. As shown in FIG. 8(c), the train status notification presented in the card state is located in a middle region of the lock screen interface of an electronic device 800. The train status notification presented in the card state may include, for example, a train number icon, a main text "Train ticket check reminder", a secondary text "Gate 6B Carriage 03 Seat 12F", and train schedule information. Compared with a train status notification presented in a capsule state, the train status notification presented in the card state can display richer notification information. For example, display space of the main text and the secondary text is larger, more content can be displayed, and train schedule information of a current train number and the like can be further displayed. The live train status notification card and a non-live notification (for example, a message notification, a phone notification, or an email notification) received by the electronic device 800 in a lock screen period may be simultaneously displayed on the lock screen interface of the electronic device 800 in a form of a card list.

In some embodiments, when a plurality of live tasks are performed on the electronic device 800 at the same time, the electronic device 800 is in a lock screen state, and a live notification is presented in a card state, a plurality of live notifications corresponding to the plurality of live tasks may be displayed in a form of stacked cards. For example, a latest refreshed live notification card may be displayed at an uppermost layer of the stacked cards, a live notification card with strongest timeliness may be displayed at an uppermost layer of the stacked cards, or the plurality of live notifications may be displayed in turn at an uppermost layer of the stacked cards. This is not limited in this application.

In some embodiments, the user may perform display switching between the plurality of stacked card-state notifications by performing a leftward sliding operation or a rightward sliding operation.

In an example, when the user performs a leftward sliding operation at a position of the music notification on an interface shown in FIG. 8(a), a display interface of the electronic device may be switched to an interface shown in FIG. 8(b), that is, switching from the music notification to the navigation notification is completed.

In some other embodiments, when a plurality of live tasks are performed on the electronic device 800 at the same time, the electronic device 800 is in a lock screen state, and a live notification is presented in a card state, a plurality of live notifications corresponding to the plurality of live tasks are sequentially displayed on the lock screen interface in a form of a card list. For example, a latest refreshed live notification card may be displayed in the first row of the card list, a live notification card with strongest timeliness may be displayed in the first row of the card list, or the plurality of live notifications may be displayed in turn in the first row of the card list. This is not limited in this application.

In some embodiments, when a task process corresponding to a notification ends, the notification displayed on the lock screen interface disappears accordingly.

In an example, a music task, a navigation task, and a train status task on the electronic device 800 are performed simultaneously. When the electronic device 800 is in a lock screen state, a card-state notification is displayed in a middle region of the lock screen interface of the electronic device 800. The card-state notification may be a music notification, a navigation notification, and a train status notification that are displayed in turn, or may be a latest refreshed live notification displayed at an uppermost layer. For example, a current display interface of the electronic device 800 is shown in FIG. 8(a). When the navigation task is refreshed, the display interface of the electronic device 800 is switched to that shown in FIG. 8(b). When the train taken by the user arrives at the destination, the train status task ends, and the train status notification displayed on the lock screen interface disappears accordingly.

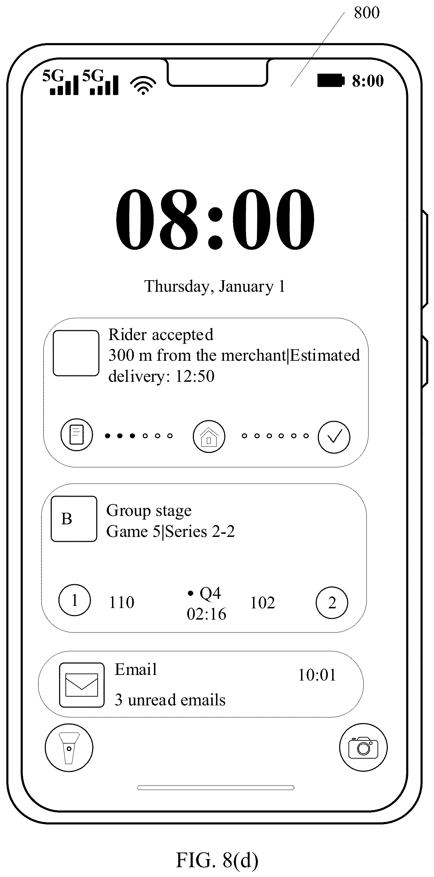

FIG. 8(d) shows a delivery progress notification and a match schedule progress notification that are presented in a card state on a lock screen interface according to an embodiment of this application. As shown in FIG. 8(d), the delivery progress notification and the match schedule progress notification that are presented in the card state are arranged in sequence (for example, arranged in a refresh sequence) in a middle region of the lock screen interface of an electronic device 800. The delivery progress notification presented in the card state may include, for example, a delivery icon, a main text "Rider accepted", a secondary text "300 m from the merchant|Estimated delivery: 12:50", and total distance information. The match schedule progress notification presented in the card state includes information such as an event icon, a main text "Group stage", a secondary text "Game 5|Series 2-2", a team name, and a real-time score. The delivery progress notification, the match schedule progress notification, and a non-live notification (for example, a message notification, a phone notification, or an email notification) received by the electronic device 800 in a lock screen period may be simultaneously displayed on the lock screen interface of the electronic device 800 in a form of a card list.

In some embodiments, when a plurality of live tasks are performed on the electronic device 800 at the same time, and the electronic device 800 is in a lock screen state, live notifications corresponding to some live tasks in the plurality of live tasks are displayed in a card-state presentation form in a stacked manner. A latest refreshed live notification may be displayed at an uppermost layer, a live notification with strongest timeliness may be displayed at an uppermost layer, or the plurality of live notifications may be displayed in turn at an uppermost layer. This is not limited in this application. The other live tasks in the plurality of live tasks may not be displayed in an overlapping manner, but a plurality of notification cards are displayed on the lock screen interface in a form of a card list according to a refresh sequence.

In an example, when a live notification (for example, an event status task) has extremely strong timeliness, the live notification may not be displayed in a stacked manner.

In embodiments of this application, content of a live notification card may include a main image or a source icon of a notification task, a main text, a secondary text, visual detailed information, and more brief operations, so that the user can directly obtain detailed content of a task process by using the lock screen interface without performing unlocking to enter an application, and can further perform a convenient operation.

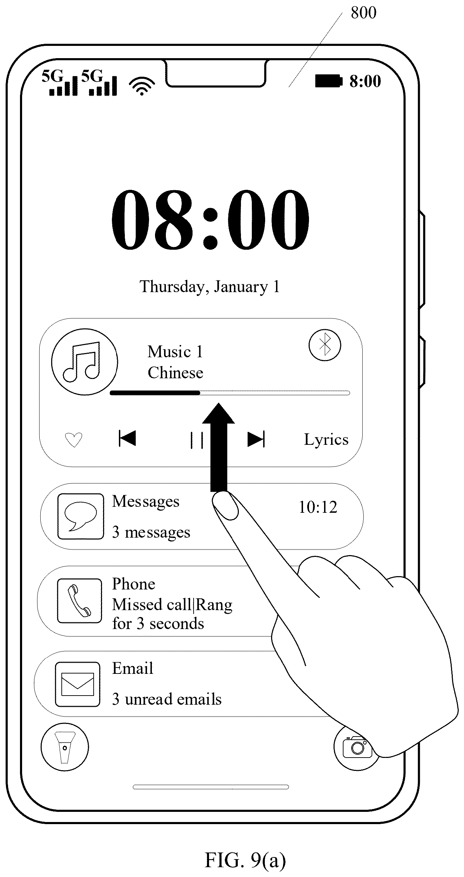

For example, based on the embodiment shown in FIG. 8(a) to FIG. 8(d), FIG. 9(a) to FIG. 9(c) are a diagram of a corresponding interface for viewing a card-state notification according to an embodiment of this application.

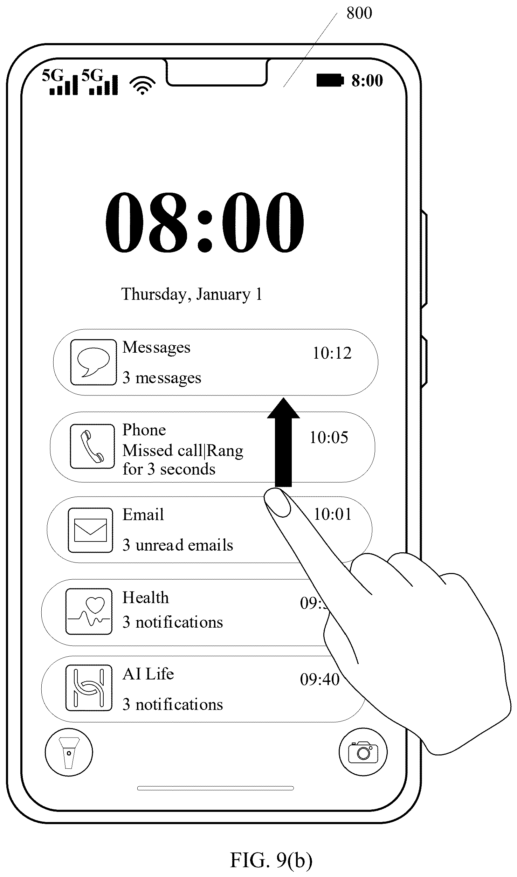

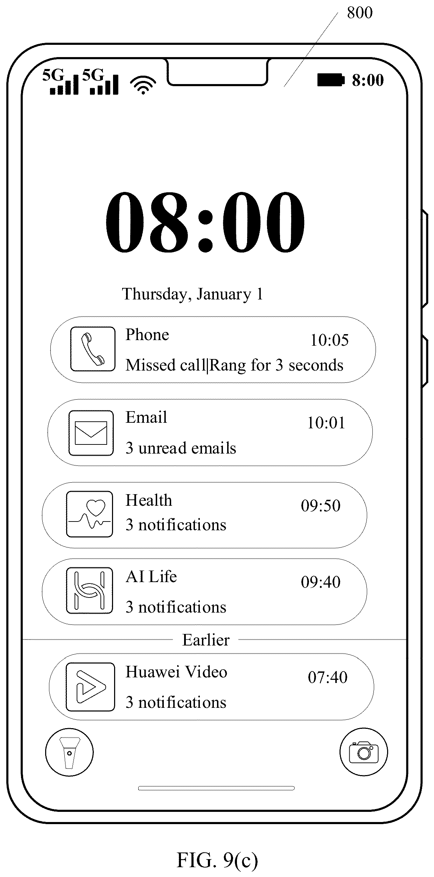

As shown in FIG. 9(a), a screen of an electronic device 800 displays a lock screen interface. On the lock screen interface, a live music notification card and a plurality of non-live notifications "message notification, phone notification, and email notification" received by the electronic device 800 in a lock screen period are displayed together in a form of a card list. When a user performs an upward sliding operation on the lock screen interface shown in FIG. 9(a), the lock screen interface of the electronic device 800 is switched to a page shown in FIG. 9(b). On the page, the live music notification card is slid up to the outside of a display region and is hidden, and non-live notifications "Health notification and AI Life notification" are slid up to the display region and are displayed. On this basis, when the user performs an upward sliding operation again, the lock screen interface of the electronic device 800 is switched to a page shown in FIG. 9(c). On the page, the message notification is slid up to the outside of the display region and is hidden, and a non-live notification "Huawei video notification" received earlier is slid up to the display region and is displayed.

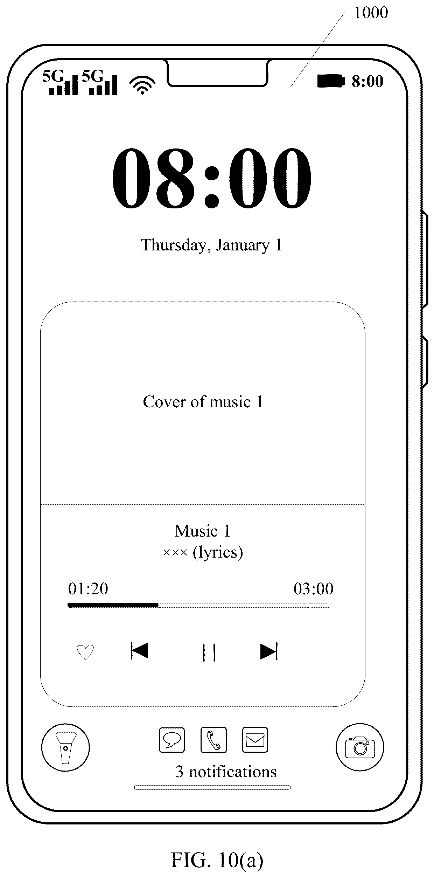

For example, FIG. 10(a) to FIG. 10(d) are a diagram of displaying an immersive-state notification in several different scenarios according to an embodiment of this application.

FIG. 10(a) shows a music notification presented in an immersive state on a lock screen interface according to an embodiment of this application. As shown in FIG. 10(a), the music notification presented in the immersive state is presented in a full screen form on the lock screen interface of an electronic device 1000. Compared with a music notification presented in a card state, the music notification presented in the immersive state displays richer content and more visual information, for example, total duration of music, duration of music that has been played, duration of music that has not been played, and lyrics, and more key shortcut operations are supported, for example, dragging a music play progress bar. When a live notification is presented in an immersive state on the lock screen interface, a non-live notification received by the electronic device 1000 in a lock screen period may be presented in a form of an icon or a notification card at the bottom of the lock screen interface, and a quantity of non-live notifications may be further displayed.

In some embodiments, when the immersive-state notification is presented in a full screen form, a display background of the electronic device is switched to a background that matches the immersive-state notification, for example, may be switched to a background that is the same as a main image of the immersive-state notification. In other words, when the immersive-state notification is presented in a full screen form, an original lock screen wallpaper displayed on the lock screen interface is covered by a background of the immersive-state notification.

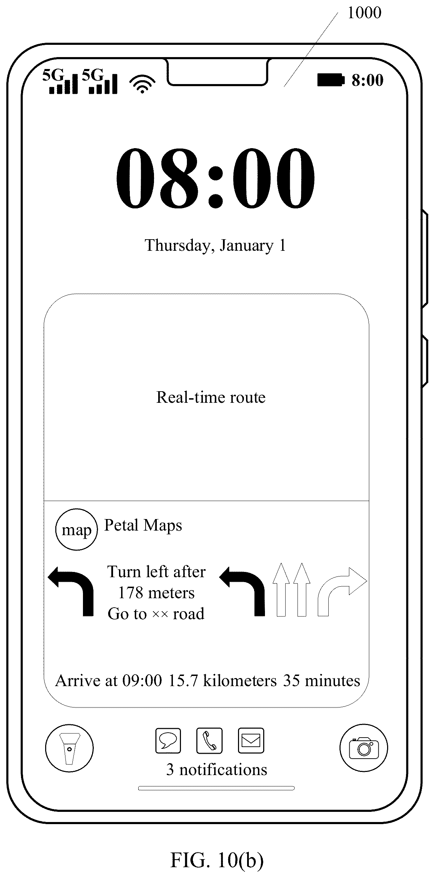

FIG. 10(b) shows a navigation notification presented in an immersive state on a lock screen interface according to an embodiment of this application. As shown in FIG. 10(b), the navigation notification presented in the immersive state is presented in a full screen form on the lock screen interface of an electronic device 1000. Compared with a navigation notification presented in a card state, the navigation notification presented in the immersive state displays richer content and more visual information, for example, a real-time route map, a remaining distance, and time required for the remaining distance, and more key shortcut operations are supported, for example, tapping a route in the real-time route map to switch a road. When a live notification is presented in an immersive state on the lock screen interface, a non-live notification received by the electronic device 1000 in a lock screen period may be presented in a form of an icon or a notification card at the bottom of the lock screen interface, and a quantity of non-live notifications may be further displayed.

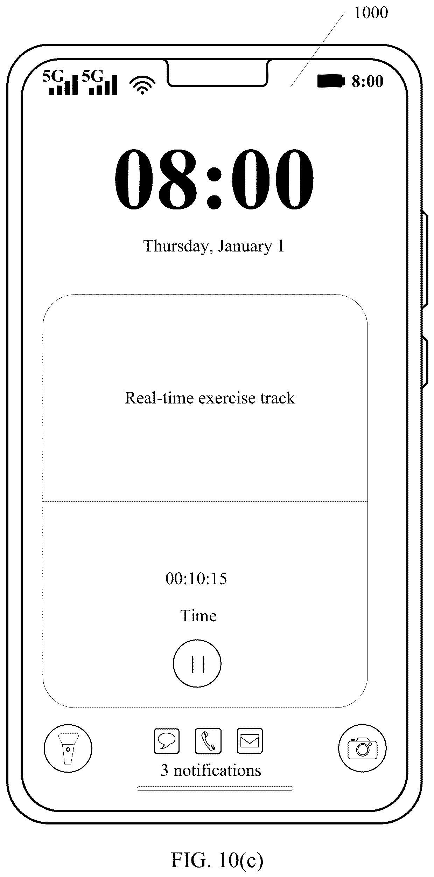

FIG. 10(c) shows an exercise notification presented in an immersive state on a lock screen interface according to an embodiment of this application. As shown in FIG. 10(c), the exercise notification presented in the immersive state is presented in a full screen form on the lock screen interface of an electronic device 1000. Compared with an exercise notification presented in a card state, the exercise notification presented in the immersive state displays richer content and more visual information, for example, a real-time exercise track diagram, and more key shortcut operations are supported, for example, enlarging or shrinking the real-time exercise track map. When a live notification is presented in an immersive state on the lock screen interface, a non-live notification received by the electronic device 1000 in a lock screen period may be presented in a form of an icon or a notification card at the bottom of the lock screen interface, and a quantity of non-live notifications may be further displayed.

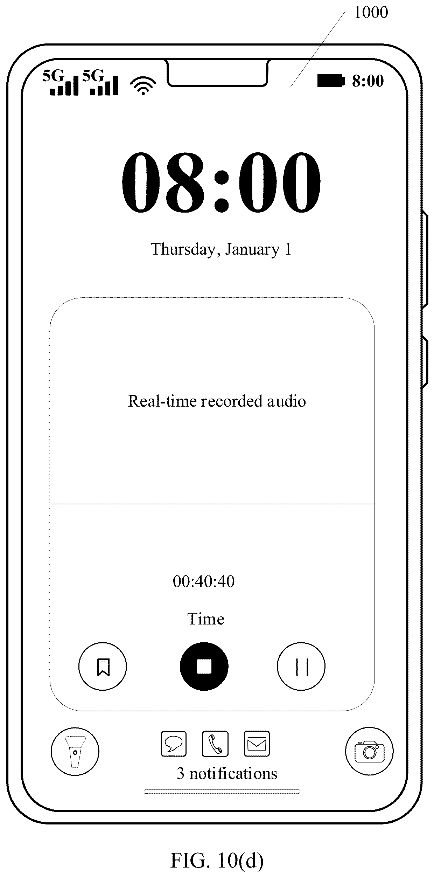

FIG. 10(d) shows a recording notification presented in an immersive state on a lock screen interface according to an embodiment of this application. As shown in FIG. 10(d), the recording notification presented in the immersive state is presented in a full screen form on the lock screen interface of an electronic device 1000. Compared with a recording notification presented in a card state, the recording notification presented in the immersive state displays richer content and more visual information, for example, more detailed real-time audio information, and more key shortcut operations are supported, for example, viewing a historical recording file, and ending and saving a current recording file. When a live notification is presented in an immersive state on the lock screen interface, a non-live notification received by the electronic device 1000 in a lock screen period may be presented in a form of an icon or a notification card at the bottom of the lock screen interface, and a quantity of non-live notifications may be further displayed.

In some embodiments, when a plurality of live tasks are performed on the electronic device 1000 at the same time, and the electronic device 1000 is in a lock screen state, a plurality of live notifications corresponding to the plurality of live tasks are displayed in an immersive-state presentation form in a stacked manner. A latest refreshed live notification may be displayed at an uppermost layer, a live notification with strongest timeliness may be displayed at an uppermost layer, or the plurality of live notifications may be displayed in turn at an uppermost layer. This is not limited in this application.

In some embodiments, when a task process corresponding to a notification ends, the notification displayed on the lock screen interface disappears accordingly.

In an example, a music task, a navigation task, an exercise recording task, and a recording task on the electronic device 1000 are performed simultaneously. When the electronic device 1000 is in a lock screen state, an immersive-state notification is displayed in full screen on the lock screen interface of the electronic device 1000. The immersive-state notification may be a music notification, a navigation notification, an exercise notification, and a recording notification that are displayed in turn, or may be a latest refreshed live notification displayed at an uppermost layer. For example, a current display interface of the electronic device 1000 is shown in FIG. 10(a). When the navigation task is refreshed, the display interface of the electronic device 1000 is switched to that shown in FIG. 10(b). When the user achieves an exercise distance goal of 2 kilometers, the exercise recording task ends, and the exercise notification displayed on the lock screen interface disappears accordingly.

In some other embodiments, when a plurality of live tasks are performed on the electronic device 1000 at the same time, and the electronic device 1000 is in a lock screen state, a plurality of live notifications corresponding to the plurality of live tasks are presented in a form of an immersive-state notification list, and only one of the plurality of immersive-state notifications can be seen on a display of the electronic device 1000. The user may implement display switching between the plurality of immersive-state notifications by sliding left or right on the screen.

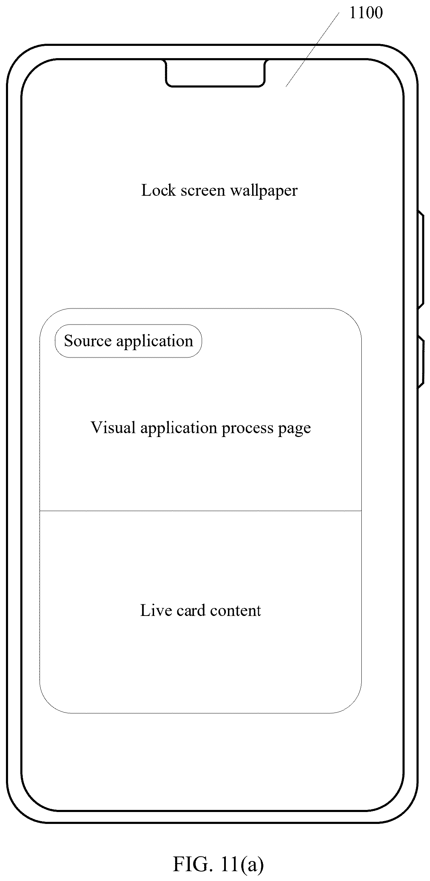

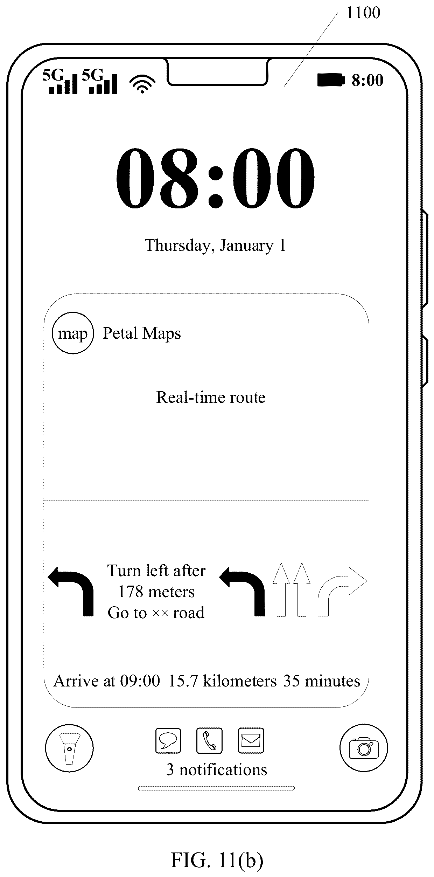

For example, with reference to FIG. 11(a) and FIG. 11(b), a display page of an immersive-state notification provided in an embodiment of this application is described in detail.

As shown in FIG. 11(a), the display page of the immersive-state notification is mainly divided into two parts. A first part is a lock screen wallpaper part in an immersive state, and a second part is a lock screen card part. The lock screen card includes a live card content region and a visual application process page, and a source application of the live notification is displayed on the lock screen card.

In some embodiments, content displayed in the live card content region is consistent with content of the live card, and a shortcut function operation may be performed or main information may be obtained in the region. Process information corresponding to the live notification is displayed on the visual application process page.

For the lock screen wallpaper in the immersive state, in some embodiments, the visual application process page may be used as the lock screen wallpaper in the immersive state. After the lock screen wallpaper in the immersive state is accessed, the lock screen wallpaper in the immersive state is refreshed based on refreshing of the visual application process page. For example, when a background color of the visual application process page changes, a background color of the lock screen wallpaper in the immersive state changes synchronously. When access to the lock screen wallpaper in the immersive state is restricted or an application does not access the lock screen wallpaper in the immersive state, the lock screen wallpaper in the immersive state is presented in a blurred background state.

In some other examples, a lock screen wallpaper of an electronic device 1100 may be used as the lock screen wallpaper in the immersive state.

As shown in FIG. 11(b), in an example, when a live notification is a navigation live notification, and the navigation live notification is displayed in an immersive state, an immersive-state display page corresponding to the navigation live notification displays an immersive-state lock screen wallpaper, live card content, a visual application process page, and a source application icon. The live card content may be, for example, the same as content of the navigation live notification displayed in a card state. For example, information such as a current navigation guide, estimated arrival time, duration of navigation that has been performed, and a quantity of remaining kilometers may be displayed, and one or more shortcut operation entries may be provided. The visual application process page may display, for example, a real-time navigation route, that is, map information. The source application icon may be, for example, a "Petal Maps" icon. The immersive-state lock screen wallpaper may be, for example, the lock screen wallpaper of the electronic device 1100, or may be a real-time navigation route page.

It should be understood that the live notification may alternatively be a music live notification, a delivery progress live notification, or the like. When the live notification is a music live notification, a corresponding visual application process page may be, for example, an album art. When the live notification is a delivery progress live notification, a corresponding visual application process page may be, for example, map information displaying a real-time delivery track.

In embodiments of this application, a notification task may be presented in full screen in an immersive state, displayed content of a notification includes a main image or a source icon of the notification task, richer content, and more visual detailed information, and more key operations are supported, so that a user can directly obtain detailed content of a live task process by using a lock screen interface in a more immersive effect without performing unlocking to enter an application.

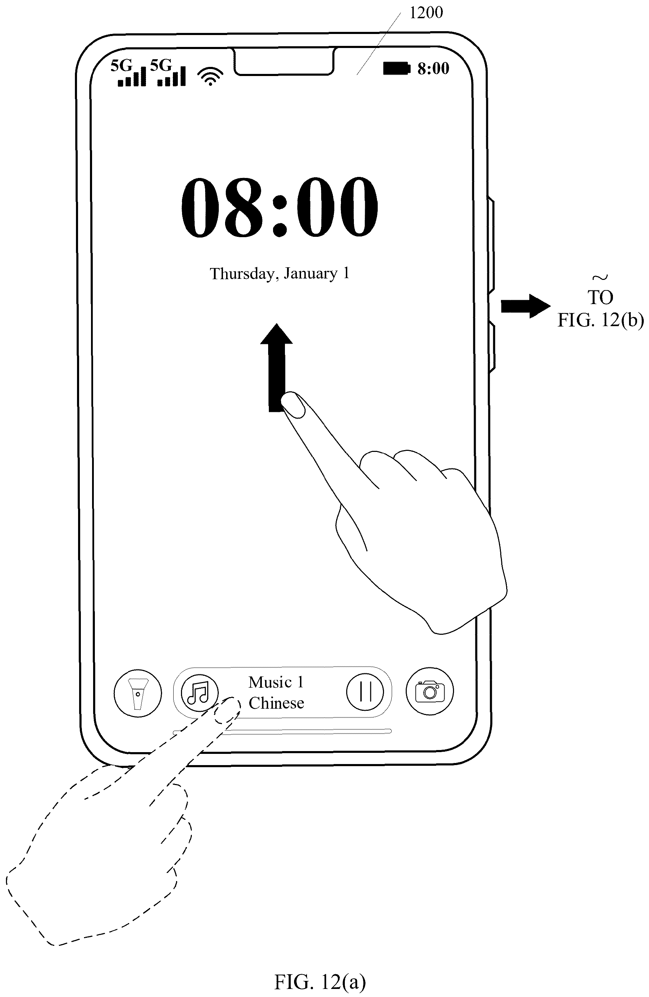

To more clearly understand a process of switching a notification between different presentation forms, for example, with reference to FIG. 12(a) to FIG. 12(c) to FIG. 14(a) to FIG. 14(c), the following describes a diagram of an interface corresponding to a process of switching a notification between different presentation forms according to an embodiment of this application.

For example, FIG. 12(a) to FIG. 12(c) are a diagram of an interface corresponding to a process of switching a notification between a capsule state and a card state according to an embodiment of this application.

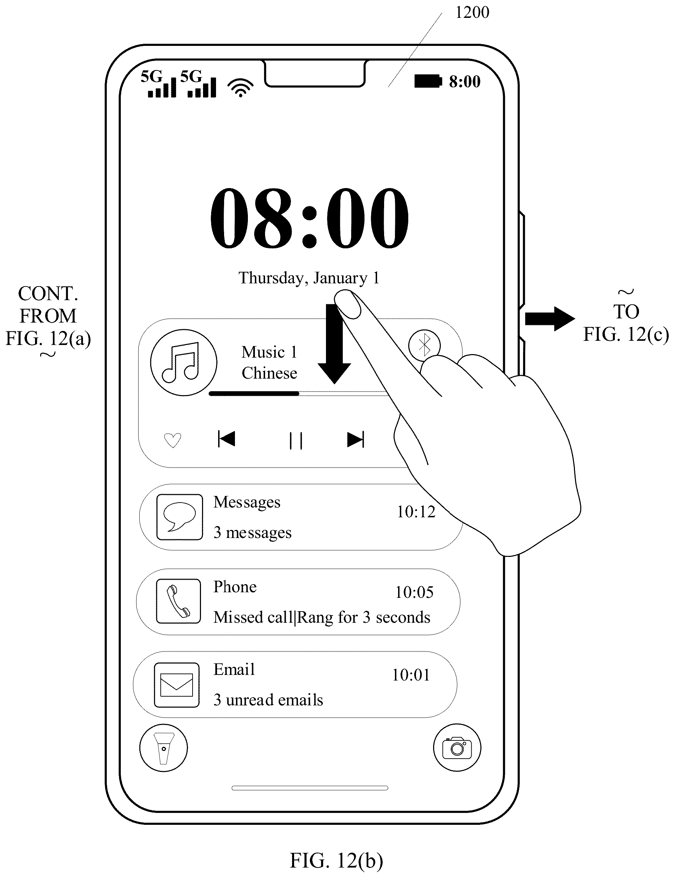

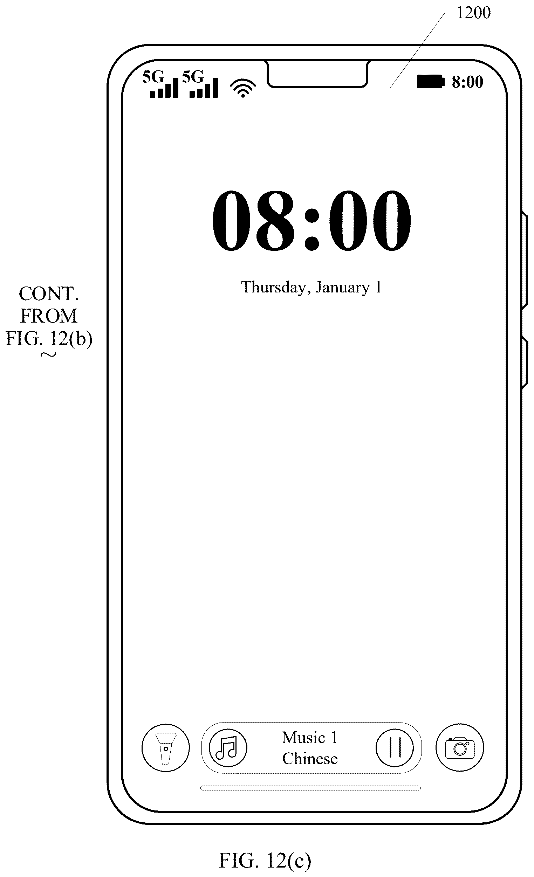

As shown in FIG. 12(a), a screen of an electronic device 1200 displays a lock screen interface, and a music notification displayed in a capsule state is displayed on the lock screen interface. When a user expects to view more detailed music notification information on the lock screen interface or a user expects to perform more operations such as music switching on the lock screen interface, the user may perform an upward sliding operation on the lock screen interface to expand the music notification from presentation in the capsule state to presentation in a card state, or the user may perform an operation of tapping a main text region and a secondary text region in the capsule-state notification (a dashed-line gesture operation shown in FIG. 12(a)) to expand the music notification from presentation in the capsule state to presentation in a card state. In this case, a lock screen interface of the electronic device 1200 is shown in FIG. 12(b). On the expanded lock screen interface, the music notification presented in the card state and another non-live notification (which may also be described as a lock screen notification) received by the electronic device 1200 in a lock screen period are displayed together in a form of a card list. When the user expects to collapse the music notification presented in the card state into a form presented in the capsule state, the user may perform, on the lock screen interface shown in FIG. 12(b), an operation of continuing to slide down after the card list reaches the top, to collapse the music notification from presentation in the card state to presentation in the capsule state, or the user may perform a side swipe back operation on the lock screen interface shown in FIG. 12(b), to collapse the music notification from presentation in the card state to presentation in the capsule state. In this case, a lock screen interface of the electronic device 1200 is shown in FIG. 12(c).

It should be understood that the foregoing manner of expanding the notification from the capsule state to the card state is merely an example for description, and the notification may be alternatively expanded from the capsule state to the card state in any other possible manner, for example, a manner of tapping a source icon of a music notification card. This is not limited in this application.

It should be understood that the foregoing manner of collapsing the notification from the card state to the capsule state is merely an example for description, and the notification may be alternatively collapsed from the card state to the capsule state in any other possible manner, for example, a manner of tapping a blank position outside the music notification card. This is not limited in this application.

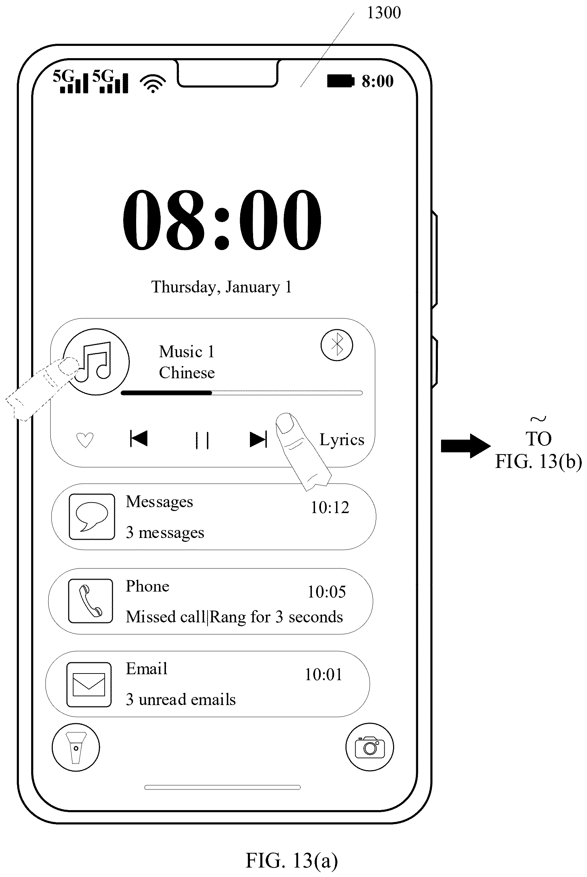

For example, FIG. 13(a) to FIG. 13(c) are a diagram of an interface corresponding to a process of switching a notification between a card state and an immersive state according to an embodiment of this application.

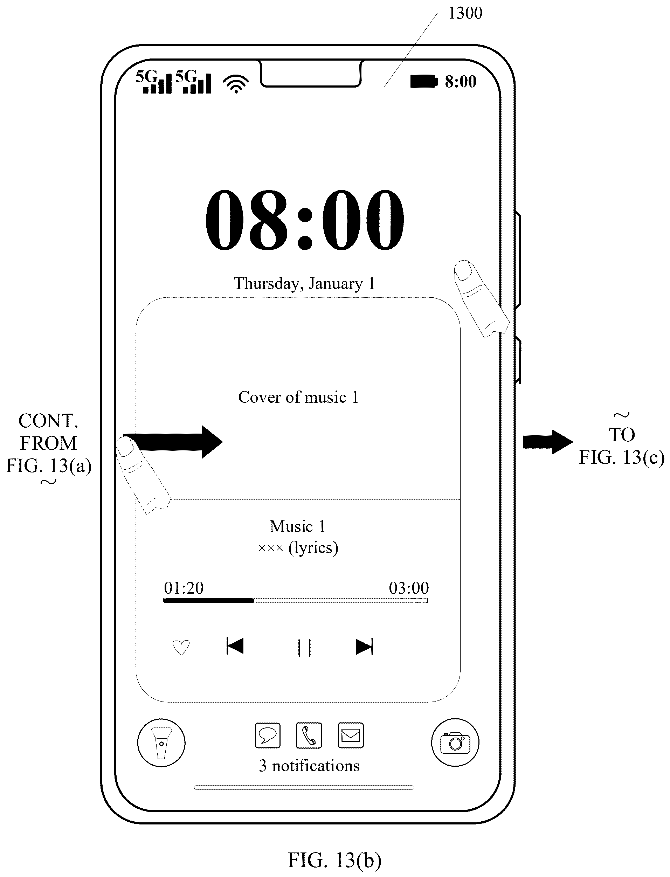

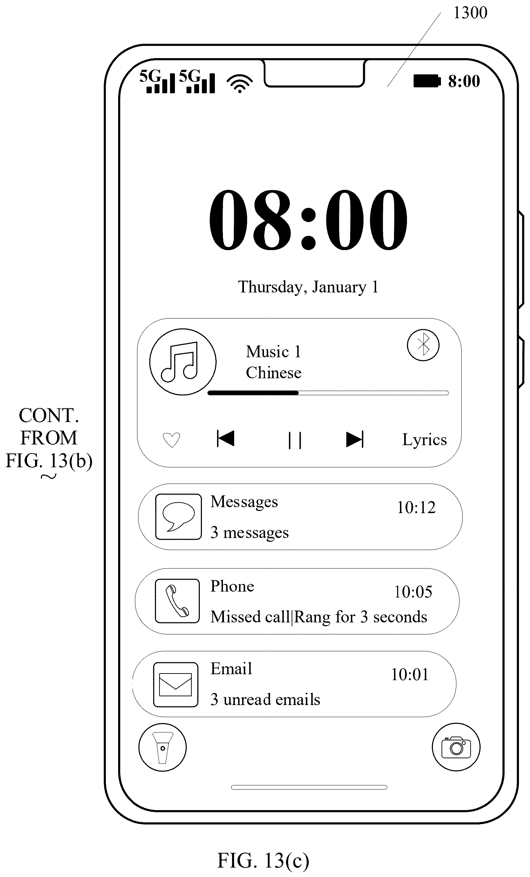

As shown in FIG. 13(a), a screen of an electronic device 1300 displays a lock screen interface, a music notification displayed in a card state is displayed on the lock screen interface, and the music notification and another non-live notification that is received by the electronic device 1300 in a lock screen period are displayed together in a form of a card list. When a user expects to view more detailed music notification information on the lock screen interface or a user expects to perform more operations on the lock screen interface, the user may tap a main image or a source icon in a music notification card on the lock screen interface, to expand the music notification from presentation in a card state to presentation in an immersive state, or the user may touch and hold the music notification card, to expand the music notification from presentation in a card state to presentation in an immersive state. In this case, a lock screen interface of the electronic device 1300 is shown in FIG. 13(b). When the user expects to collapse the music notification presented in the immersive state into a form presented in the card state, the user may tap a blank region outside the notification on the lock screen interface shown in FIG. 13(b), to collapse the music notification from presentation in the immersive state to presentation in the card state, or the user may perform a side swipe back operation, to collapse the music notification from presentation in the immersive state to presentation in the card state. In this case, a lock screen interface of the electronic device 1300 is shown in FIG. 13(c).

It may be understood that when the electronic device 1300 displays a lock screen interface, if an immersive-state notification is displayed on the lock screen interface, a background of the lock screen interface matches the immersive-state notification. In this embodiment of this application, a background of the lock screen interface shown in FIG. 13(a) is an original lock screen background, a background of the lock screen interface shown in FIG. 13(b) is switched to a background that matches the immersive-state music notification, and a background of the lock screen interface shown in FIG. 13(c) is restored to the original lock screen background.

It should be understood that the foregoing manner of expanding the notification from the card state to the immersive state is merely an example for description, and the notification may be alternatively expanded from the card state to the immersive state in any other possible manner, for example, a manner of tapping a blank position in the music notification card. This is not limited in this application.

It should be understood that the foregoing manner of collapsing the notification from the immersive state to the card state is merely an example for description, and the notification may be alternatively collapsed from the immersive state to the card state in any other possible manner, for example, a manner of performing a downward sliding operation on the screen of the electronic device. This is not limited in this application.

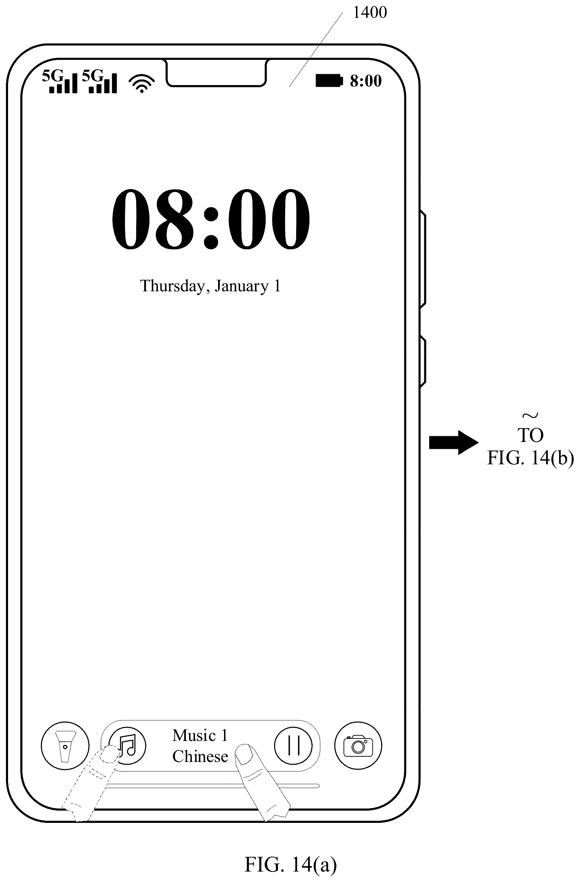

For example, FIG. 14(a) to FIG. 14(c) are a diagram of an interface corresponding to a process of switching a notification between a capsule state and an immersive state according to an embodiment of this application.

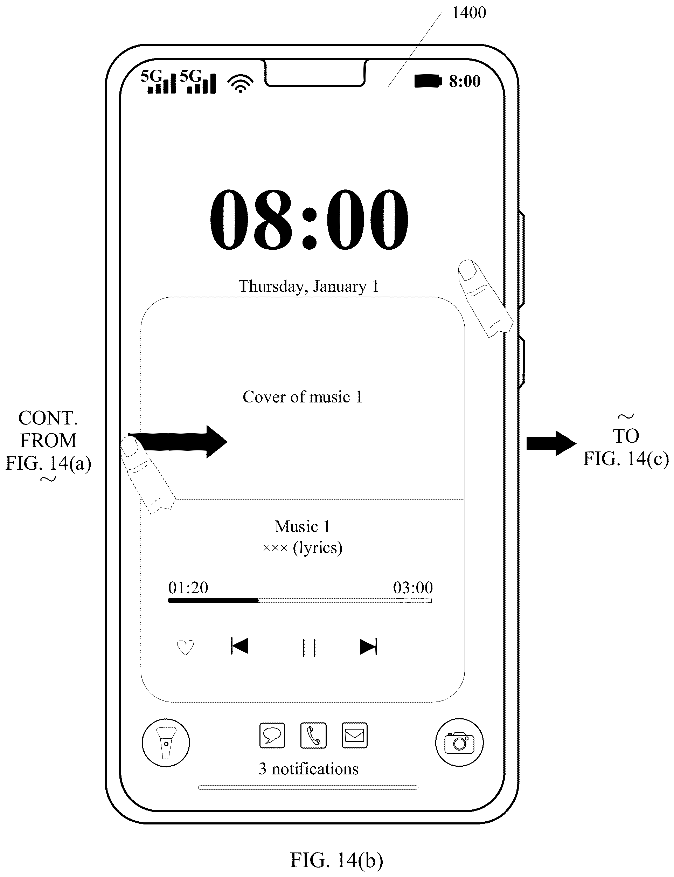

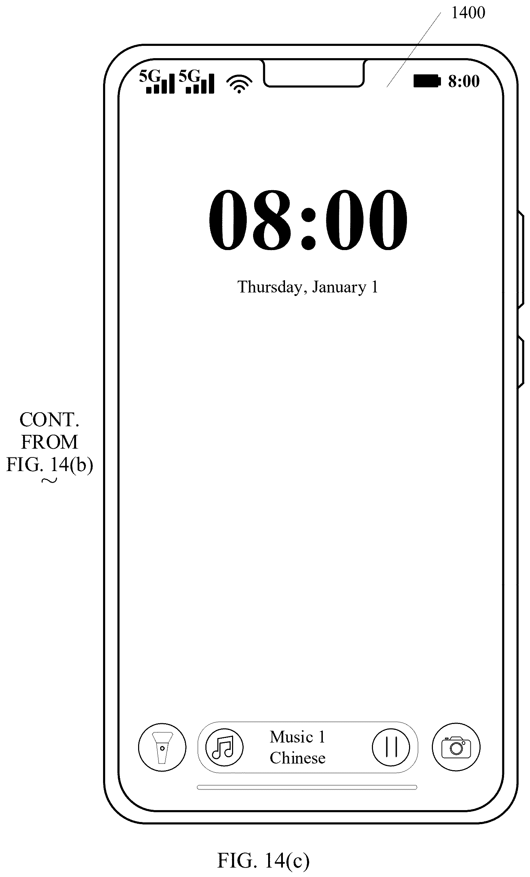

As shown in FIG. 14(a), a screen of an electronic device 1400 displays a lock screen interface, and a music notification displayed in a capsule state is displayed on the lock screen interface. When a user expects to view more detailed music notification information on the lock screen interface to a maximum extent (or focus on the music notification), or a user expects to perform a plurality of operations on the lock screen interface, the user may perform an operation of touching and holding the music notification on the lock screen interface, to expand the music notification from presentation in a capsule state to presentation in an immersive state, or the user may perform an operation of tapping a main image or a source icon in the capsule-state notification, to expand the music notification from presentation in a capsule state to presentation in an immersive state. In this case, a lock screen interface of the electronic device 1400 is shown in FIG. 14(b). When the user expects to collapse the music notification presented in the immersive state into a form presented in the capsule state, the user may perform a side swipe back operation on the lock screen interface shown in FIG. 14(b), to collapse the music notification from presentation in the immersive state to presentation in the capsule state, or the user may tap a blank position outside the music notification card, to collapse the music notification from presentation in the immersive state to presentation in the capsule state. In this case, a lock screen interface of the electronic device 1400 is shown in FIG. 14(c).

It should be understood that the foregoing manner of expanding the notification from the capsule state to the immersive state is merely an example for description, and the notification may be alternatively expanded from the card state to the immersive state in any other possible manner, for example, a manner of double-tapping the music notification. This is not limited in this application.

It should be understood that the foregoing manner of collapsing the notification from the immersive state to the capsule state is merely an example for description, and the notification may be alternatively collapsed from the immersive state to the card state in any other possible manner, for example, a manner of performing a downward sliding operation on the screen of the electronic device. This is not limited in this application.

In embodiments of this application, a notification task may be quickly switched between a capsule state, a card state, and an immersive state by using an operation such as tapping, touching and holding, or sliding. An interaction manner is simple and easy to use. Quick switching between any two notification presentation forms can well match live notification display requirements of a user in different use scenarios, so that user experience is improved.

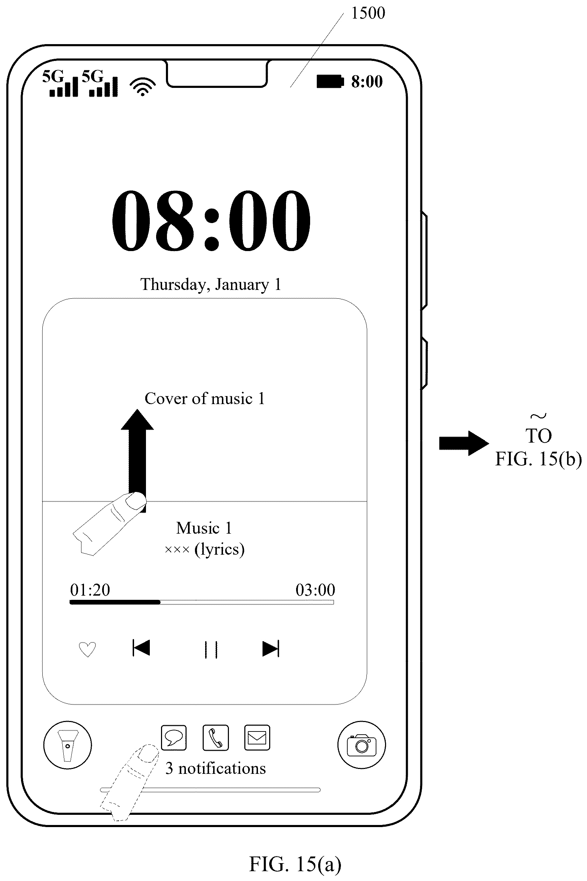

For example, FIG. 15(a) to FIG. 15(c) are a diagram of a corresponding interface for switching from an immersive-state notification display interface to a card list display interface according to an embodiment of this application.

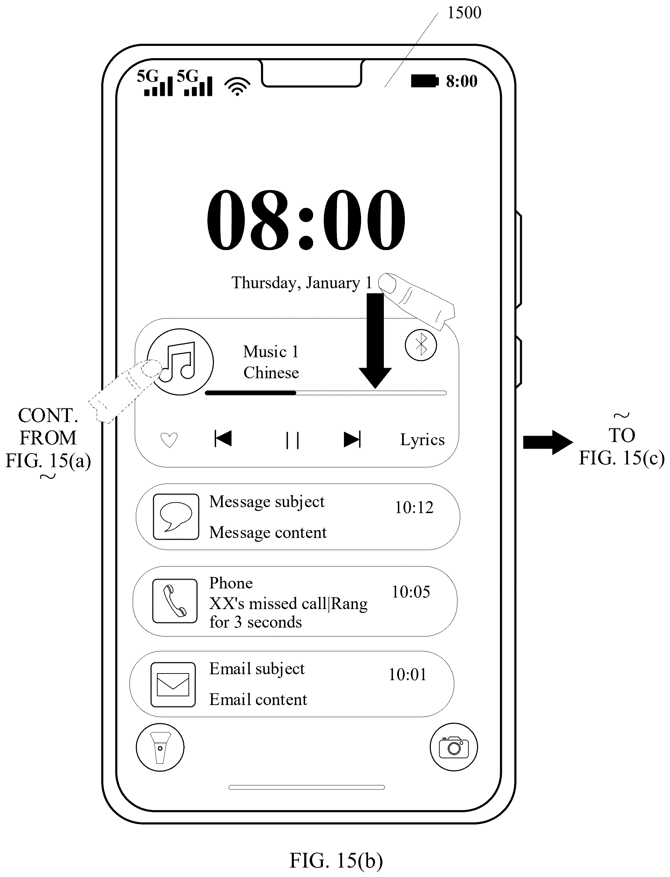

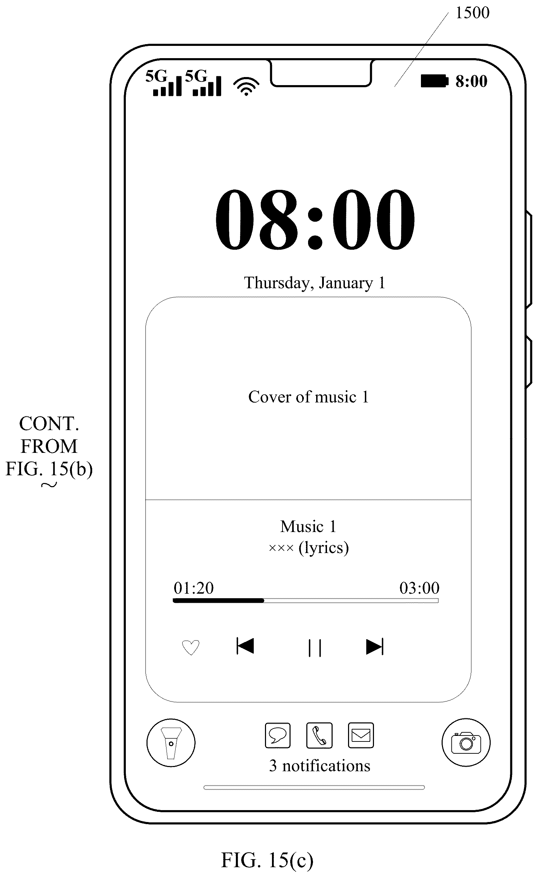

As shown in FIG. 15(a), a screen of an electronic device 1500 displays a lock screen interface. On the lock screen interface, a music notification is displayed in an immersive state, a non-live notification (which may also be described as a lock screen notification) received by the electronic device 1500 in a lock screen period is presented in a form of an icon at the bottom of the lock screen interface, and a quantity of non-live notifications may be further displayed. For example, received lock screen notifications include a message notification, a phone notification, and an email notification, and a quantity of received notifications is 3. When a user expects to view the lock screen notification on the lock screen interface, the user may perform an upward sliding operation on the lock screen interface to switch the lock screen interface of the electronic device 1500 to a lock screen interface shown in FIG. 15(b), or the user may perform an operation of tapping the lock screen notification on the lock screen interface to switch the lock screen interface of the electronic device 1500 to a lock screen interface shown in FIG. 15(b). On the lock screen interface after switching, the music notification and a plurality of lock screen notifications (for example, a message notification, a phone notification, and an email notification) are displayed in a form of a card list. The user may view detailed lock screen notification information by using a lock screen notification card displayed on the page. When the user expects to exit the current card list display form, collapse the lock screen notification, and return to immersive-state presentation of the music notification, the user may tap a main image or a source icon of the music notification. In this case, the lock screen interface of the electronic device 1500 is switched to a page shown in FIG. 15(c). Alternatively, the user may perform a downward sliding operation on the lock screen interface shown in FIG. 15(b). In this case, the lock screen interface of the electronic device 1500 is switched to a page shown in FIG. 15(c). On the page, the lock screen notification is collapsed.

It may be understood that when the electronic device 1500 displays a lock screen interface, if an immersive-state notification is displayed on the lock screen interface, a background of the lock screen interface matches the immersive-state notification. In this embodiment of this application, a background of the lock screen interface shown in FIG. 15(b) is the same as a background of the lock screen interface shown in FIG. 15(a).

In this embodiment of this application, when the immersive-state background remains unchanged, the card-state notification is called out by using the immersive-state notification, so that the user can achieve a stronger immersive-state experience effect visually.

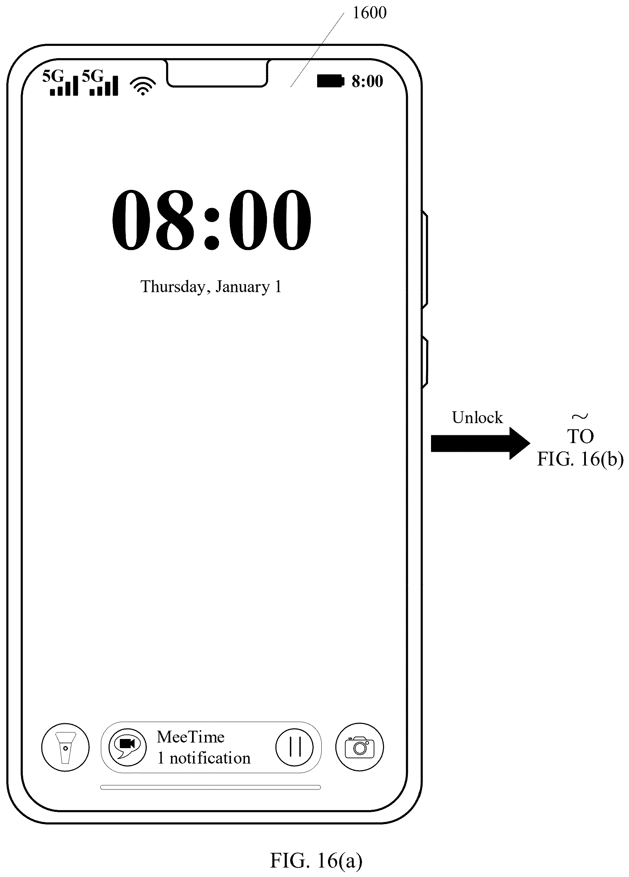

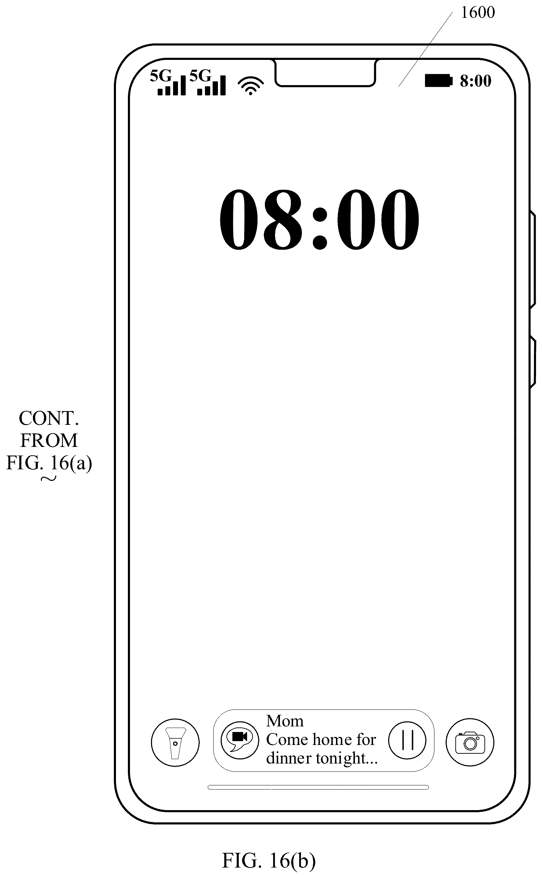

For example, FIG. 16(a) and FIG. 16(b) are a diagram of a corresponding lock screen interface when there is no live notification task process on an electronic device according to an embodiment of this application.

As shown in FIG. 16(a), a screen of an electronic device 1600 currently displays a lock screen interface, and a MeeTime application installed on the electronic device runs in the background. When receiving a single MeeTime message, the electronic device 1600 presents a MeeTime notification in a capsule state at the bottom of the lock screen interface of the electronic device, to remind a user that a message from a MeeTime friend is received. On this basis, the user may perform a facial unlocking operation on the electronic device 1600. After facial unlocking succeeds, a display of the electronic device may still display the lock screen interface, and detailed notification content, that is, a specific message sent by a specific friend, for example, a message "Will you come home for dinner tonight?" sent by mom, may be viewed by using the capsule-state notification (as shown in FIG. 16(b)).

It may be understood that when the electronic device is in a lock screen state, the user performs a facial recognition operation on the electronic device. When facial recognition succeeds for the first time, display unlocking may be performed on a message notification displayed on the lock screen interface. When facial recognition succeeds for the second time, a display interface of the electronic device may jump to an unlocking interface.

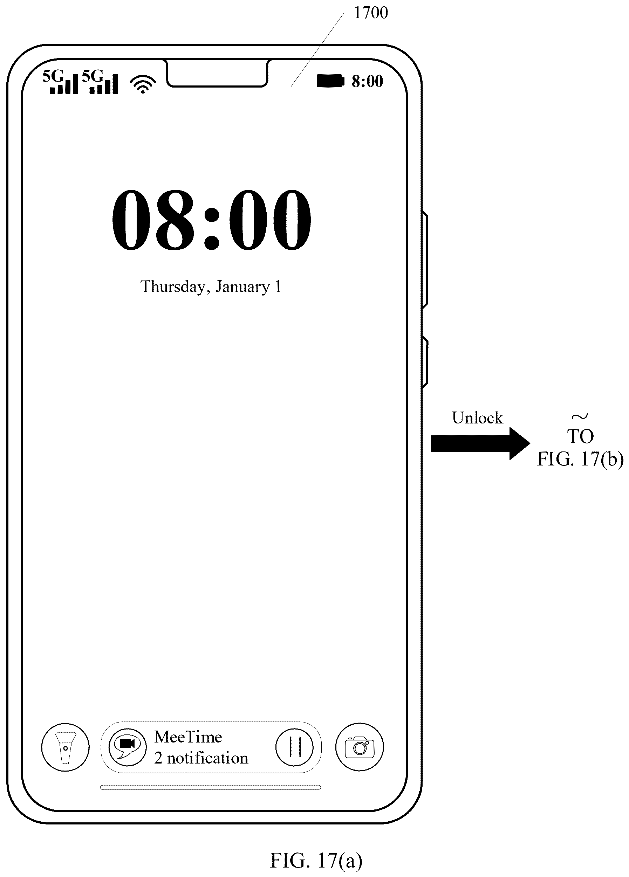

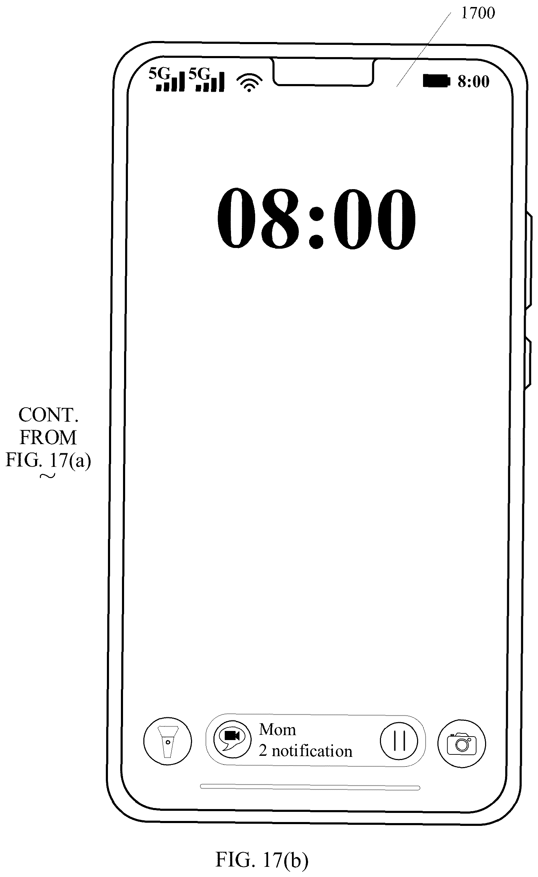

For example, in parallel with the embodiment shown in FIG. 16(a) and FIG. 16(b), FIG. 17(a) and FIG. 17(b) are a diagram of another corresponding lock screen interface when there is no live notification task process on an electronic device according to an embodiment of this application.

As shown in FIG. 17(a), a screen of an electronic device 1700 currently displays a lock screen interface, and a MeeTime application installed on the electronic device runs in the background. When receiving a plurality of MeeTime messages, the electronic device 1700 presents a MeeTime notification in a capsule state at the bottom of the lock screen interface of the electronic device, to remind a user that a plurality of messages from a MeeTime friend are received. On this basis, the user may perform a facial unlocking operation on the electronic device 1700. After facial unlocking succeeds, a display of the electronic device may still display the lock screen interface, and detailed notification content, that is, a message sent by a specific friend, may be viewed by using the capsule-state notification (as shown in FIG. 17(b)).

It may be understood that when the electronic device is in a lock screen state, the user performs a facial recognition operation on the electronic device. When facial recognition succeeds for the first time, display unlocking may be performed on a message notification displayed on the lock screen interface. When facial recognition succeeds for the second time, a display interface of the electronic device may jump to an unlocking interface.

In embodiments of this application, when the electronic device is in the lock screen state and no live task is ongoing, a received non-live notification (that is, a lock screen notification) can be presented in a capsule state, so that purity of the lock screen interface can be further improved. In addition, the user can further view corresponding message details on the lock screen interface in a first-unlocking manner, thereby improving user experience.

For example, in parallel with the embodiments shown in FIG. 16(a) and FIG. 16(b) and FIG. 17(a) and FIG. 17(b), FIG. 18(a) to FIG. 18(c) are a diagram of another corresponding lock screen interface when there is no live notification task process on an electronic device according to an embodiment of this application.

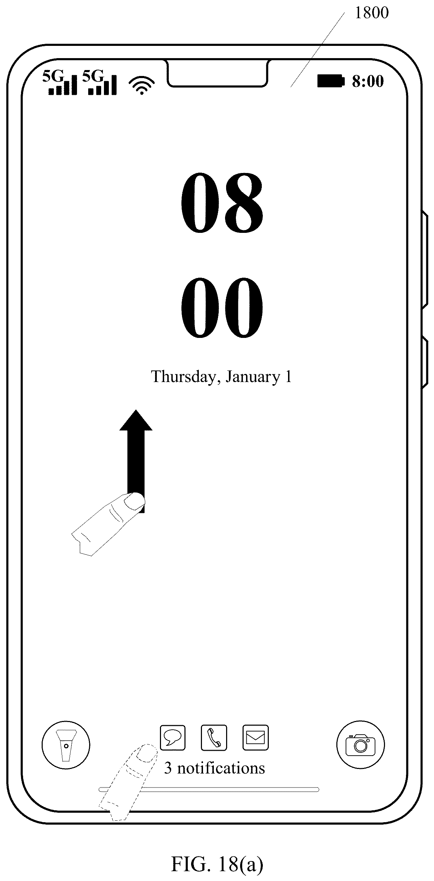

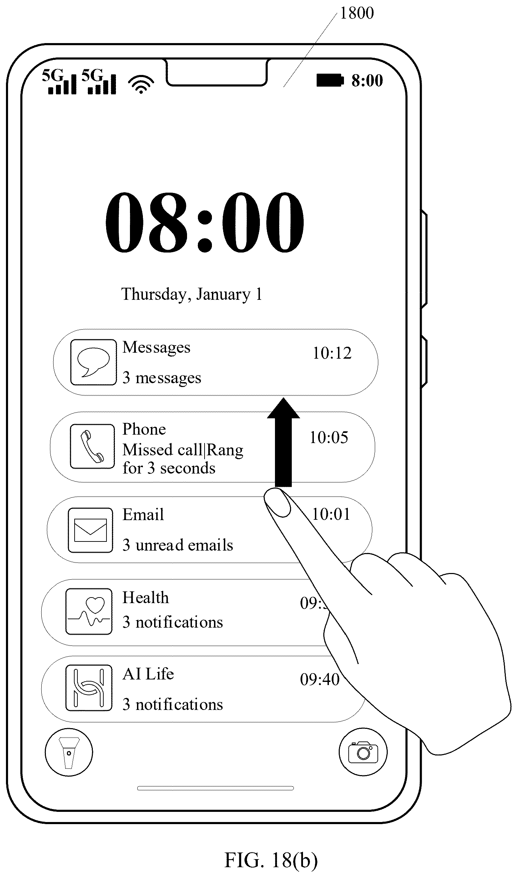

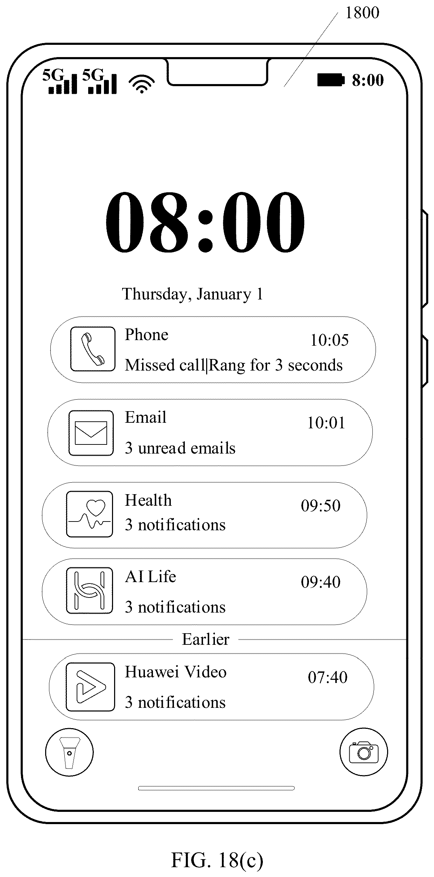

As shown in FIG. 18(a), a screen of an electronic device 1800 currently displays a lock screen interface, and applications such as a MeeTime application, a phone application, and an email application installed on the electronic device run in the background. When receiving messages such as a MeeTime message, a missed call, and an email in a lock screen period, the electronic device 1800 displays icons of applications such as the MeeTime application, the phone application, and the email application at the bottom of the lock screen interface of the electronic device, and may further display a quantity of received message notifications, to remind a user that the messages from the applications such as the MeeTime application, the phone application, and the email application are received. Based on this, the user may perform an operation of sliding up or perform an operation of tapping an icon on the screen of the electronic device 1800 to switch the lock screen interface of the electronic device 1800 to that shown in FIG. 18(b). On the lock screen interface after switching, a plurality of notifications are displayed in a form of a card list, and the user may view details of the received messages on the page. The user may browse the notification messages in the card list by performing an operation of sliding up or down on the page. For example, the user may slide up on the lock screen interface shown in FIG. 18(b), to browse an earlier received lock screen notification (as shown in FIG. 18(c)).

In some embodiments, the lock screen interface of the electronic device may be further returned from the page shown in FIG. 18(b) to the page shown in FIG. 18(a) by using a specific gesture operation (for example, a side swipe back operation or an up-and-down sliding operation on the screen).

In embodiments of this application, when an electronic device is in a lock screen state, and no live task is ongoing, a received non-live notification (that is, a lock screen notification) can be presented in a form of an icon, so that purity of a lock screen interface can be further improved. After a card list is entered, there is no corresponding live card, and a corresponding immersive state cannot be entered, but an operation such as sliding on a lock screen or tapping an icon to expand the card list is still retained. This is consistent with an operation form when there is a live notification task, so that a user expectation is satisfied, operation mind of the user on the lock screen is enhanced, and user experience is improved.

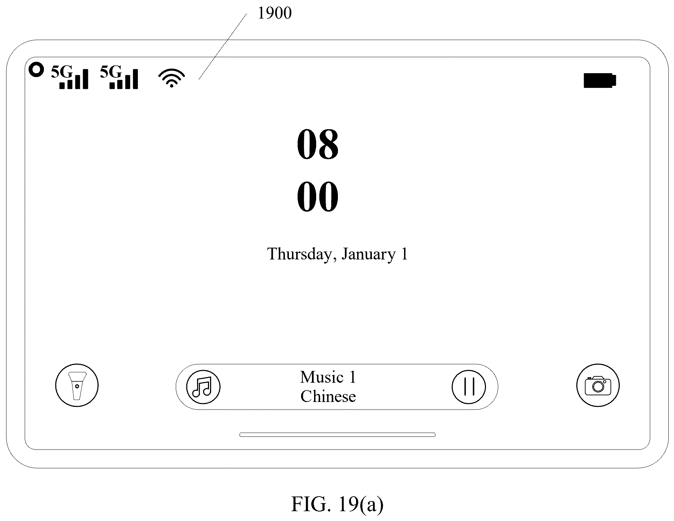

For example, the electronic device is a tablet. FIG. 19(a) to FIG. 19(c) are a diagram of a presentation manner of a live notification displayed on a lock screen interface when a tablet is in a lock screen state according to an embodiment of this application.

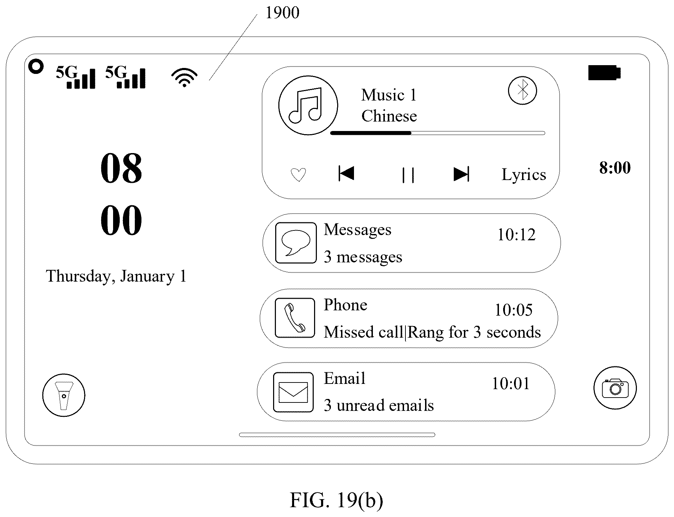

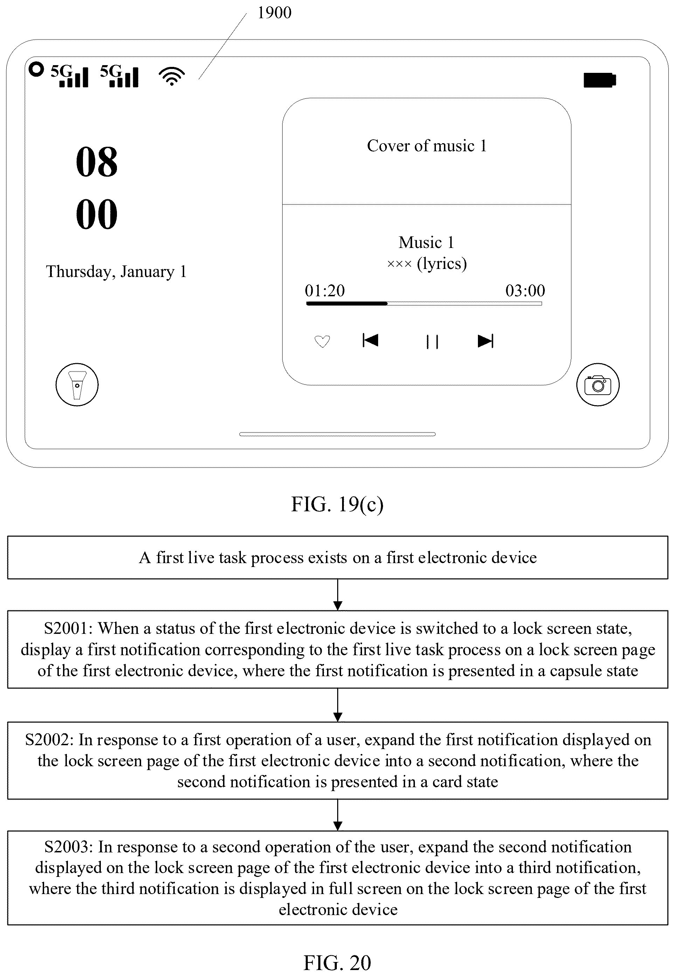

FIG. 19(a) is a diagram of an interface of displaying a music notification on a lock screen interface of a tablet 1900 in a capsule-state presentation manner; FIG. 19(b) is a diagram of an interface of displaying a music notification on a lock screen interface of a tablet 1900 in a card-state presentation manner; and FIG. 19(c) is a diagram of an interface of displaying a music notification on a lock screen interface of a tablet 1900 in an immersive-state presentation manner. As shown in FIG. 19(a), FIG. 19(b), and FIG. 19(c), compared with that of a live notification displayed on a lock screen interface of a mobile phone, a size of a live notification displayed on the lock screen interface of the tablet 1900 may be horizontally extended to adapt to a display area of the tablet 1900. In addition, because display space of the live notification is larger, the live notification displayed on the tablet 1900 can display more notification content, and a display position of the live notification, a display element form, and the like can be automatically adapted to a display of the tablet 1900 for display.

In embodiments of this application, live notifications displayed on different electronic devices are not absolutely the same, and display adaptation can be performed between an electronic device and a live notification displayed on the electronic device. In other words, a size, a display position, and the like of the live notification displayed on the electronic device are adapted to a screen size of the electronic device, so that a notification style that is most convenient for a user to view and use can be presented based on screen features of different electronic devices, thereby enriching use scenarios of the live notification. In this way, the user can achieve good use experience on different electronic devices.

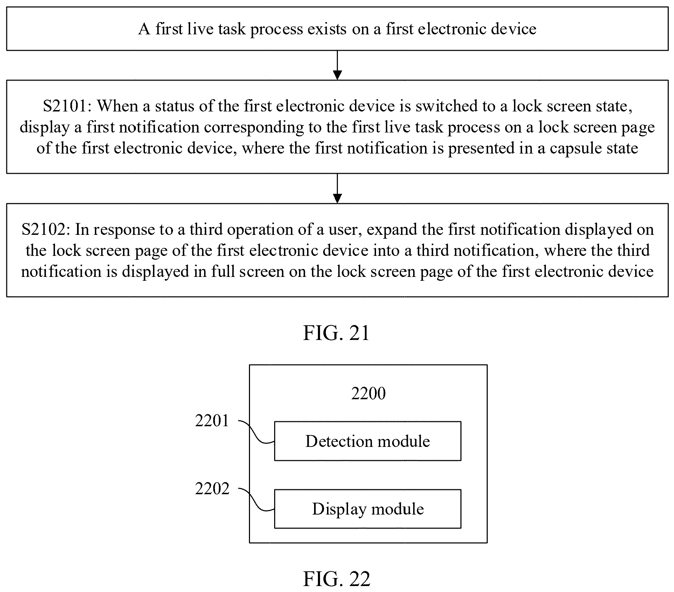

For example, with reference to FIG. 20 and FIG. 21, the following describes a schematic flowchart corresponding to a notification display method according to an embodiment of this application.

For example, FIG. 20 is a schematic flowchart of a notification display method 2000 according to an embodiment of this application. As shown in FIG. 20, the method 2000 includes the following steps.

S2001: In a case that a first live task process exists on a first electronic device, when a status of the first electronic device is switched to a lock screen state, display a first notification corresponding to the first live task process on a lock screen interface of the first electronic device, where the first notification is presented in a capsule state.

The first notification presented in the capsule state displays key information of the first live task process, and may further display a shortcut operation button related to the first live task process.

In some embodiments, the first notification includes an operation support region and a convenient operation region. The operation support region includes a main image region and a text region. The main image region may be used to display a main image or a source icon of the first notification. The text region may be used to display key information of the first notification. The convenient operation region is used to display a shortcut operation button corresponding to the first notification.

In some embodiments, a display area occupied by the first notification presented in the capsule state may be less than 1/10 of an area of a display of the first electronic device.

In some embodiments, the first notification is displayed in a bottom region of the lock screen interface of the first electronic device, to reduce blocking of personalized content on the lock screen interface as much as possible.

In some embodiments, this step may be further described as follows: In a case that a first live task process exists on a first electronic device, when a status of the first electronic device is switched to a lock screen state, display a first interface on a screen of the first electronic device, where the first interface includes a lock screen interface and a first notification displayed on the lock screen interface, and the first notification is presented in a capsule state.

In some embodiments, in a case that a plurality of live task processes exist on the first electronic device, when the status of the first electronic device is switched to the lock screen state, a plurality of first notifications that are in one-to-one correspondence with the plurality of live task processes are displayed on the lock screen interface of the first electronic device in a stacked manner.

The stacked display manner may be that a latest refreshed first notification is displayed at a top layer of the stacked notifications.

In some embodiments, when the plurality of first notifications are displayed on the lock screen interface of the first electronic device in a stacked manner, a user may implement display switching between the plurality of first notifications by performing a leftward sliding operation or a rightward sliding operation.

S2002: In response to a first operation of the user, expand the first notification displayed on the lock screen interface of the first electronic device into a second notification, where the second notification is presented in a card state.

The second notification presented in the card state displays information about the first live task process, and may further display a shortcut operation button related to the first live task process. In addition, the information about the first live task process presented in the second notification is more than the information about the first live task process presented in the first notification, and/or a quantity of shortcut operation options supported by the second notification is greater than a quantity of shortcut operation options supported by the first notification.

In some embodiments, a display area occupied by the second notification presented in the card state may be greater than or equal to 1/10 of the area of the display of the first electronic device and less than 1/3 of the area of the display of the first electronic device.

In some embodiments, the second notification is displayed in a middle region of the lock screen interface of the first electronic device.

In some embodiments, the first operation of the user may be any one of the following operations: an operation that the user slides up on the lock screen interface on which the first notification is displayed, or an operation that the user taps the text region of the first notification on the lock screen interface on which the first notification is displayed. In addition, the first operation of the user may alternatively be another gesture operation, for example, a gesture operation preset by the user. This is not limited in this application.

In some embodiments, this step may be further described as follows: In response to a first operation of the user, display a second interface on the screen of the first electronic device, where the second interface includes the lock screen interface and a second notification displayed on the lock screen interface, the second notification is obtained by expanding the first notification, and the second notification is presented in a card state.

In some embodiments, in a case that a plurality of live task processes exist on the first electronic device, a plurality of second notifications that are in one-to-one correspondence with the plurality of live task processes are displayed on the lock screen interface of the first electronic device in a stacked manner; or a plurality of second notifications are displayed on the lock screen interface of the first electronic device in an expanded manner in a form of a card list; or some second notifications in a plurality of second notifications are displayed on the lock screen interface of the first electronic device in a stacked manner, and the other second notifications are displayed on the lock screen interface of the first electronic device in an expanded manner in a form of a card list.

When the plurality of second notifications are displayed in a stacked manner, a latest refreshed second notification may be displayed at a top layer of the stacked notifications. When the plurality of second notifications are displayed in an expanded manner in a form of a card list, a latest refreshed second notification may be displayed in the first place of the card list.

In some embodiments, when the plurality of second notifications are displayed in a stacked manner, the user may implement display switching between the plurality of second notifications by performing a leftward sliding operation or a rightward sliding operation.

In some embodiments, the second notification and a lock screen notification that is received by the first electronic device in a lock screen period are displayed together on the lock screen interface of the first electronic device in a form of a card list.

S2003: In response to a second operation of the user, expand the second notification displayed on the lock screen interface of the first electronic device into a third notification, where the third notification is displayed in full screen on the lock screen interface of the first electronic device.

A presentation manner in which the third notification is displayed in full screen on the lock screen interface of the first electronic device may be described as follows: The third notification is presented in an immersive state. The third notification presented in the immersive state displays information about the first live task process, and may further display a shortcut operation button related to the first live task process. In addition, the information about the first live task process presented in the third notification is more than the information about the first live task process presented in the second notification, and/or a quantity of shortcut operation options supported by the third notification is greater than the quantity of shortcut operation options supported by the second notification.

In some embodiments, a display area occupied by the third notification presented in the immersive state is equal to the area of the display of the first electronic device, and display of the third notification presented in the immersive state covers display of the lock screen interface of the first electronic device.

In some embodiments, the second operation of the user may be any one of the following operations: an operation that the user taps a main image region of the second notification on the lock screen interface on which the second notification is displayed, or an operation that the user touches and holds the second notification on the lock screen interface on which the second notification is displayed. In addition, the second operation of the user may alternatively be another operation, for example, a gesture operation preset by the user. This is not limited in this application.

In some embodiments, this step may be further described as follows: In response to a second operation of the user, display a third interface on the screen of the first electronic device, where the third interface includes a third notification displayed in full screen, and the third notification is obtained by expanding the first notification or the second notification.

In some embodiments, after the first notification is expanded into the second notification, the method may further include the following step: In response to a fourth operation performed by the user on a display page of the second notification, collapse the second notification displayed on the lock screen interface of the first electronic device into the first notification.

In some embodiments, after the second notification is expanded into the third notification, the method may further include the following step: In response to the fourth operation performed by the user on a display page of the third notification, collapse the third notification displayed on the lock screen interface of the first electronic device into the second notification.

In some embodiments, the fourth operation of the user may be any one of the following operations: an operation that the user slides down on the lock screen interface of the first electronic device, an operation that the user taps a blank region on the lock screen interface of the first electronic device, or an operation that the user performs side swipe back on the lock screen interface of the first electronic device. In addition, the second operation of the user may alternatively be another operation, for example, a gesture operation preset by the user. This is not limited in this application.

In some embodiments, in a case that a plurality of live task processes exist on the first electronic device, a plurality of third notifications that are in one-to-one correspondence with the plurality of live task processes are displayed on the lock screen interface of the first electronic device in an expanded manner in a form of a list.

In some embodiments, only one third notification can be displayed on the display of the first electronic device at the same time. In other words, in a plurality of third notifications that are arranged in an expanded manner, only one third notification is located in a visible region. For example, the user may implement display switching between the plurality of third notifications by performing a leftward sliding operation or a rightward sliding operation.

In some embodiments, when the third notification is displayed on the screen of the first electronic device, if the first electronic device receives a lock screen notification, an icon corresponding to the lock screen notification may be displayed at the bottom of the display page of the third notification, to remind the user that the lock screen notification is received, and to provide a view entry of the lock screen notification for the user.

In embodiments of this application, a manner of presenting a notification task on a lock screen interface is provided. The method supports presentation of notification tasks in different forms (a capsule state, a card state, and an immersive state), and can implement mutual switching between notification tasks in different presentation forms, to satisfy notification display requirements of a user in different scenarios. For example, when the user wants a purer personalized lock screen display effect, a capsule-state notification may be used. When the user wants to obtain more key information of a notification or perform more quick operations, a card-state notification may be used. When the user wants to better focus on a current notification task, an immersive-state notification may be used. In this way, it can be ensured to a greater extent that a personalized effect of a lock screen is fully presented, and the user can quickly obtain key information of a notification without unlocking an electronic device, and can further perform a shortcut operation. In addition, the user can focus on current notification processing on the lock screen interface or the home screen, and can obtain more detailed notification information and perform more shortcut operations without frequently performing unlocking to enter the home screen or frequently entering an application.

For example, FIG. 21 is a schematic flowchart of another notification display method 2100 according to an embodiment of this application. As shown in FIG. 21, the method 2100 includes the following steps.

S2101: In a case that a first live task process exists on a first electronic device, when a status of the first electronic device is switched to a lock screen state, display a first notification corresponding to the first live task process on a lock screen interface of the first electronic device, where the first notification is presented in a capsule state.

An explanation of this step is the same as an explanation of S2001 in the embodiment shown in FIG. 20. For brevity, details are not described herein again.

S2102: In response to a third operation of a user, expand the first notification displayed on the lock screen interface of the first electronic device into a third notification, where the third notification is displayed in full screen on the lock screen interface of the first electronic device.

Explanations of the first notification and the third notification have been described in detail in the embodiment shown in FIG. 20. For brevity, details are not described herein again.

In some embodiments, the third operation of the user may be any one of the following operations: an operation that the user taps a main image region of the first notification on the lock screen interface on which the first notification is displayed, or an operation that the user touches and holds the first notification on the lock screen interface on which the first notification is displayed. In addition, the third operation of the user may alternatively be another operation, for example, a gesture operation preset by the user. This is not limited in this application.

In some embodiments, after the first notification is expanded into the third notification, the method may further include the following step: In response to a fourth operation performed by the user on a display page of the third notification, collapse the third notification displayed on the lock screen interface of the first electronic device into the first notification.

In embodiments of this application, a notification can be switched between a capsule state and an immersive state, so that notification display requirements of the user in different scenarios can be further satisfied.

For example, FIG. 22 is a diagram of functional modules of a notification display apparatus 2200 according to an embodiment of this application. As shown in FIG. 22, the apparatus 2200 includes:
a detection module 2201, configured to detect whether a first live task process exists on a first electronic device when the first electronic device enters a lock screen state; and
a display module 2202, configured to: in a case that the first live task process exists on the first electronic device, when a status of the first electronic device is switched to the lock screen state, display a first notification corresponding to the first live task process on a lock screen interface of the first electronic device, where the first notification is presented in a capsule state.

The first notification presented in the capsule state displays key information of the first live task process, and may further display a shortcut operation button related to the first live task process.

An explanation of the first notification has been described in detail in the embodiment shown in FIG. 20. For brevity, details are not described herein again.

The display module 2202 is further configured to: in a case that a plurality of live task processes exist on the first electronic device, when the status of the first electronic device is switched to the lock screen state, display a plurality of first notifications that are in one-to-one correspondence with the plurality of live task processes on the lock screen interface of the first electronic device in a stacked manner.

The stacked display manner may be that a latest refreshed first notification is displayed at a top layer of the stacked notifications.

The display module 2202 is further configured to: in response to a first operation performed by a user on a display page of the first notification, display a second notification on the lock screen interface of the first electronic device, and cancel display of the first notification, where the second notification is presented in a card state. This may also be understood as that the second notification is an expanded state of the first notification.

An explanation of the second notification has been described in detail in the embodiment shown in FIG. 20. For brevity, details are not described herein again.

An explanation of the first operation of the user has been described in detail in the embodiment shown in FIG. 20. For brevity, details are not described herein again.

The display module 2202 is further configured to: in a case that a plurality of live task processes exist on the first electronic device, display a plurality of second notifications that are in one-to-one correspondence with the plurality of live task processes on the lock screen interface of the first electronic device in a stacked manner, or display a plurality of second notifications on the lock screen interface of the first electronic device in an expanded manner in a form of a card list, or display some second notifications in a plurality of second notifications in a stacked manner and display the other second notifications in an expanded manner in a form of a card list on the lock screen interface of the first electronic device.

The display module 2202 is further configured to display, on the lock screen interface of the first electronic device in a form of a card list, a second notification and a lock screen notification that is received by the first electronic device in a lock screen period.

The display module 2202 is further configured to: in response to a second operation performed by the user on a display page of the second notification, display a third notification in full screen on the lock screen interface of the first electronic device, and cancel display of the second notification.

An explanation of the third notification has been described in detail in the embodiment shown in FIG. 20. For brevity, details are not described herein again.

An explanation of the second operation of the user has been described in detail in the embodiment shown in FIG. 20. For brevity, details are not described herein again.

The display module 2202 is further configured to: in response to a third operation performed by the user on a display page of the first notification, display a third notification in full screen on the lock screen interface of the first electronic device, and cancel display of the first notification.

An explanation of the third operation of the user has been described in detail in the embodiment shown in FIG. 21. For brevity, details are not described herein again.

The display module 2202 is further configured to: in response to a fourth operation performed by the user on a display page of the second notification, display a first notification on the lock screen interface of the first electronic device, and cancel display of the second notification, where the first notification is obtained by collapsing the second notification.

The display module 2202 is further configured to: in response to a fourth operation performed by the user on a display page of the third notification, display a second notification on the lock screen interface of the first electronic device, and cancel display of the third notification, where the second notification is obtained by collapsing the third notification.

The display module 2202 is further configured to: in response to a fourth operation performed by the user on a display page of the third notification, display a first notification on the lock screen interface of the first electronic device, and cancel display of the third notification, where the first notification is obtained by collapsing the third notification.

An explanation of the fourth operation of the user has been described in detail in the embodiment shown in FIG. 20. For brevity, details are not described herein again.

When the third notification is displayed on a screen of the first electronic device, the display module 2202 is further configured to: when the first electronic device receives a lock screen notification, display an icon corresponding to the lock screen notification at the bottom of the display page of the third notification, where the icon is used to remind the user that the lock screen notification is received, and is further used to provide a view entry of the lock screen notification for the user.

The detection module 2201 is further configured to detect the first operation, the second operation, the third operation, or the fourth operation of the user.

In embodiments of this application, the provided notification display apparatus supports presentation of notification tasks in different forms (a capsule state, a card state, and an immersive state), and can implement mutual switching between notification tasks in different presentation forms, to satisfy notification display requirements of a user in different scenarios. For example, when the user wants a purer personalized lock screen display effect, a capsule-state notification may be used. When the user wants to obtain more key information of a notification or perform more quick operations, a card-state notification may be used. When the user wants to better focus on a current notification task, an immersive-state notification may be used. In this way, it can be ensured to a greater extent that a personalized effect of a lock screen is fully presented, and the user can quickly obtain key information of a notification without unlocking an electronic device, and can further perform a shortcut operation. In addition, the user can focus on current notification processing on the lock screen interface or the home screen, and can obtain more detailed notification information and perform more shortcut operations without frequently performing unlocking to enter the home screen or frequently entering an application.

One or more of the modules or units described in this specification may be implemented by software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing. The processor may be built in a SoC (system on chip) or an application-specific integrated circuit (application-specific integrated circuit, ASIC), or may be an independent semiconductor chip. In addition to the core configured to perform operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to perform the foregoing method procedure.

When the modules or units described in this specification are implemented by using software, all or some of the modules or units may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A notification display method, wherein the method comprises:
in a case that a first live task process exists on a first electronic device, when a status of the first electronic device is switched to a lock screen state, displaying a first notification corresponding to the first live task process on a lock screen interface of the first electronic device, wherein the first notification is presented in a capsule state;
in response to a first operation of a user, expanding the first notification displayed on the lock screen interface of the first electronic device into a second notification, wherein the second notification is presented in a card state; and
in response to a second operation of the user, expanding the second notification displayed on the lock screen interface of the first electronic device into a third notification, wherein the third notification is displayed in full screen on the lock screen interface of the first electronic device.

2. The method according to claim 1, wherein the method further comprises:
in response to a third operation of the user, expanding the first notification displayed on the lock screen interface of the first electronic device into the third notification.

3. The method according to claim 2, wherein the method further comprises:
in response to a fourth operation performed by the user on a display page of the third notification, collapsing the third notification displayed on the lock screen interface of the first electronic device into the first notification.

4. The method according to claim 1, wherein the method further comprises:
in response to a fourth operation performed by the user on a display page of the second notification, collapsing the second notification displayed on the lock screen interface of the first electronic device into the first notification; or
in response to the fourth operation performed by the user on a display page of the third notification, collapsing the third notification displayed on the lock screen interface of the first electronic device into the second notification.

5. The method according to any one of claims 1 to 4, wherein information about the first live task process presented in the second notification is more than information about the first live task process presented in the first notification, and information about the first live task process presented in the third notification is more than the information about the first live task process presented in the second notification.

6. The method according to any one of claims 1 to 5, wherein a quantity of shortcut operation options supported by the second notification is greater than a quantity of shortcut operation options supported by the first notification, and a quantity of shortcut operation options supported by the third notification is greater than the quantity of shortcut operation options supported by the second notification.

7. The method according to any one of claims 1 to 6, wherein the method further comprises:
in a case that a plurality of first live task processes exist on the first electronic device, when the status of the first electronic device is switched to the lock screen state, displaying a plurality of first notifications that are in one-to-one correspondence with the plurality of first live task processes on the lock screen interface of the first electronic device in a stacked manner.

8. The method according to any one of claims 1 to 7, wherein the method further comprises:
in a case that a plurality of first live task processes exist on the first electronic device, displaying a plurality of second notifications that are in one-to-one correspondence with the plurality of first live task processes on the lock screen interface of the first electronic device in an expanded manner in a form of a card list.

9. The method according to claim 8, wherein the card list comprises a non-live notification card received by the first electronic device in the lock screen state.

10. The method according to any one of claims 1 to 9, wherein the method further comprises:
in a case that a plurality of first live task processes exist on the first electronic device, triggering, through a switching operation of the user, display switching between a plurality of third notifications that are in one-to-one correspondence with the plurality of first live task processes.

11. The method according to claim 10, wherein the switching operation comprises an operation that the user slides left on the display page of the third notification, or an operation that the user slides right on the display page of the third notification.

12. The method according to claim 10 or 11, wherein when a screen of the first electronic device displays the display page of the third notification, if the first electronic device receives a first message notification, an icon corresponding to the first message notification is displayed in a bottom region of the display page of the third notification, wherein the icon is used to remind the user that the first message is received, and is further used to provide a view entry of the first message for the user.

13. The method according to any one of claims 1 to 12, wherein the method comprises:
in a case that no live task process exists on the first electronic device, when the first electronic device receives a first message in the lock screen state, displaying a first message notification corresponding to the first message on the lock screen interface of the first electronic device, wherein the first message notification is presented in a capsule state.

14. The method according to any one of claims 1 to 13, wherein the first operation comprises an operation that the user slides up on the lock screen interface on which the first notification is displayed, or an operation that the user taps a text region of the first notification on the lock screen interface on which the first notification is displayed.

15. The method according to any one of claims 1 to 14, wherein the second operation comprises an operation that the user taps a main image region of the second notification on the lock screen interface on which the second notification is displayed, or an operation that the user touches and holds the second notification on the lock screen interface on which the second notification is displayed.

16. The method according to any one of claims 1 to 15, wherein the third operation comprises an operation that the user taps a main image region of the first notification on the lock screen interface on which the first notification is displayed, or an operation that the user touches and holds the first notification on the lock screen interface on which the first notification is displayed.

17. The method according to claim 3, wherein the fourth operation comprises an operation that the user slides down on the lock screen interface of the first electronic device, an operation that the user taps a blank region on the lock screen interface of the first electronic device, or an operation that the user performs side swipe back on the lock screen interface of the first electronic device.

18. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 17.

19. A computer-readable storage medium, wherein the storage medium stores a program or instructions, and when the program or the instructions are run, the method according to any one of claims 1 to 17 is implemented.

20. A chip, wherein the chip stores instructions, and when the instructions are run, the method according to any one of claims 1 to 17 is implemented.

21. A computer program product, wherein the computer program product stores a program or instructions, and when the program or the instructions are run, the method according to any one of claims 1 to 17 is implemented.
